# EUROPEAN PATENT APPLICATION

(11) **EP 4 572 289 A1**
(43) Date of publication of application: **18.06.2025**
(21) Application number: 23858870.1
(22) Date of filing: 28.06.2023
(51) Int. Cl.: H04L 47/50

(54) **QUEUE SCHEDULING METHOD AND APPARATUS**

(30) Priority: 31.08.2022 CN 202211057634
(71) Applicant: Huawei Technologies Co., Ltd., Shenzhen, Guangdong 518129 (CN)
(72) Inventor: WANG, Tongtong, Shenzhen, Guangdong 518129 (CN); HE, Xiang, Shenzhen, Guangdong 518129 (CN)
(74) Representative: Gill Jennings & Every LLP
(86) International application number: PCT/CN2023/103188
(87) International publication number: WO 2024/045832

(57) **Abstract**

A queue scheduling method and apparatus are provided, and belong to the field of network technologies. The method includes: A packet scheduler in a network device receives first indication information, where the first indication information indicates a first boundary of a data transmission periodicity of a physical layer (physical layer, PHY) in the network device. The packet scheduler determines a queue scheduling periodicity based on the first indication information, where the queue scheduling periodicity is used to schedule a plurality of packet queues. The packet scheduler schedules the plurality of packet queues based on the queue scheduling periodicity. In this application, scheduling the plurality of packet queues does not require clock synchronization among network-wide network devices, and therefore requirements on the network devices are low.

## Description

This application claims priority to Chinese Patent Application No. 202211057634.1, filed on August 31, 2022 and entitled "QUEUE SCHEDULING METHOD AND APPARATUS", which is incorporated herein by reference in its entirety.

### TECHNICAL FIELD

This application relates to the field of network technologies, and in particular, to a queue scheduling method and apparatus.

### BACKGROUND

In a deterministic network, to ensure network quality, a network device usually uses a cyclic queuing and forwarding (cyclic queuing and forwarding, CQF) algorithm to cyclically schedule a plurality of packet queues according to a pre-planned queue scheduling periodicity and queue scheduling moment (or referred to as a queue switching moment), for packet storage and forwarding.

However, the CQF algorithm requires clock synchronization among network-wide network devices, imposing a high requirement on the network devices.

### SUMMARY

This application provides a queue scheduling method and apparatus, so that a network device can periodically schedule a plurality of packet queues without clock synchronization on network-wide network devices. In this way, differences between queue scheduling periodicities of different network devices remain stable, for example, the queue scheduling periodicities of the different network devices are equal, and time differences between boundaries of the queue scheduling periodicities of the different network devices remain stable (for example, the time differences are constant). This application has a low requirement on the network device, has low implementation costs, and has high practicability. The technical solutions of this application are as follows.

According to a first aspect, a queue scheduling method is provided. The method includes: A packet scheduler in a network device receives first indication information, where the first indication information indicates a first boundary of a data transmission periodicity of a PHY in the network device. The packet scheduler determines a queue scheduling periodicity based on the first indication information, where the queue scheduling periodicity is used to schedule a plurality of packet queues. The packet scheduler schedules the plurality of packet queues based on the queue scheduling periodicity. For example, the packet scheduler determines the queue scheduling periodicity based on the first boundary of the data transmission periodicity of the PHY. The data transmission periodicity of the PHY is used by the PHY to periodically transmit data.

According to the technical solution provided in this application, the network device includes the packet scheduler and the PHY. The PHY periodically transmits the data, and the first indication information indicates the first boundary of the data transmission periodicity of the PHY. The packet scheduler determines the queue scheduling periodicity based on the first indication information, and schedules the plurality of packet queues based on the queue scheduling periodicity. Therefore, determining the queue scheduling periodicity and scheduling the plurality of packet queues by the packet scheduler based on the queue scheduling periodicity do not require clock synchronization between the network device and another network device, for example, clock synchronization among network-wide network devices, and therefore requirements on the network devices are low. In this application, the packet queue can be periodically scheduled without deployment of a clock synchronization system in the network device, and the differences between the queue scheduling periodicities of different network devices can remain stable. This avoids a shift problem of the queue scheduling periodicities of the different network devices (that is, a problem that the differences between the queue scheduling periodicities of the different network devices are unstable) caused by clock errors. In this application, the clock synchronization system does not need to be deployed in the network device. Therefore, implementation costs of the solution in this application are low, and practicability is high.

Optionally, before the packet scheduler determines the queue scheduling periodicity based on the first indication information, the method further includes: The packet scheduler receives a notification message sent by the PHY, where the notification message is used to notify the packet scheduler that a data alignment status of the PHY is a locked state. The packet scheduler determines, based on the notification message, that the data alignment status of the PHY is the locked state. That the data alignment status of the PHY is the locked state indicates that differences between data transmission periodicities of PHYs of different network devices remain stable. For example, the data transmission periodicities of the PHYs of the different network devices are equal, and time differences between boundaries of the data transmission periodicities of the PHYs of the different network devices remain stable (for example, the time differences are constant).

According to the technical solution provided in this application, after the packet scheduler determines, based on the notification message sent by the PHY, that the data alignment status of the PHY is the locked state, the packet scheduler determines the queue scheduling periodicity based on the boundary of the data transmission periodicity of the PHY. Therefore, differences between the queue scheduling periodicity determined by the packet scheduler and queue scheduling periodicities of other network devices can remain stable. In this way, differences between queue scheduling periodicities of different network devices remain stable.

Optionally, before the packet scheduler determines the queue scheduling periodicity based on the first indication information, the method further includes: The packet scheduler receives second indication information and third indication information, where the second indication information indicates a second boundary of the data transmission periodicity of the PHY, the third indication information indicates a third boundary of the data transmission periodicity of the PHY, and the first boundary, the second boundary, and the third boundary are three adjacent boundaries. The packet scheduler determines, based on the first indication information, the second indication information, and the third indication information, that the data alignment status of the PHY is the locked state. For example, the packet scheduler determines, based on the first boundary, the second boundary, and the third boundary of the data transmission periodicity of the PHY, that the data alignment status of the PHY is the locked state.

According to the technical solution provided in this application, the packet scheduler determines, based on the indication information indicating the three adjacent boundaries of the data transmission periodicity of the PHY, that the data alignment status of the PHY is the locked state. After the packet scheduler determines that the data alignment status of the PHY is the locked state, the packet scheduler determines the queue scheduling periodicity based on the boundary of the data transmission periodicity of the PHY. Therefore, differences between the queue scheduling periodicity determined by the packet scheduler and queue scheduling periodicities of other different network devices can remain stable. In this way, differences between queue scheduling periodicities of different network devices remain stable.

Optionally, that the packet scheduler determines, based on the first indication information, the second indication information, and the third indication information, that the data alignment status of the PHY is the locked state includes: The packet scheduler determines two adjacent data transmission periodicities of the PHY based on the first indication information, the second indication information, and the third indication information. The packet scheduler determines that the two adjacent data transmission periodicities are equal, and the packet scheduler determines that the data alignment status of the PHY is the locked state. In other words, when the two adjacent data transmission periodicities of the PHY are equal, the packet scheduler determines that the data alignment status of the PHY is the locked state.

Optionally, the method further includes: The packet scheduler receives fourth indication information, where the fourth indication information indicates a fourth boundary of the data transmission periodicity of the PHY, and the fourth boundary is adjacent to the first boundary. Correspondingly, the packet scheduler determines a queue scheduling periodicity based on the first indication information includes: The packet scheduler determines the queue scheduling periodicity based on the first indication information and the fourth indication information. For example, the packet scheduler determines the queue scheduling periodicity based on the first boundary and the fourth boundary.

According to the technical solution provided in this application, the packet scheduler determines the queue scheduling periodicity based on the indication information indicating the two adjacent boundaries of the data transmission periodicity of the PHY, for example, determines a length of the queue scheduling periodicity. Therefore, when the packet scheduler determines the queue scheduling periodicity, clock synchronization on network-wide network devices is not needed, and a requirement on the network device is low.

Optionally, that the packet scheduler determines the queue scheduling periodicity based on the first indication information and the fourth indication information includes: The packet scheduler determines the data transmission periodicity of the PHY based on the first indication information and the fourth indication information. The packet scheduler determines the queue scheduling periodicity based on the data transmission periodicity of the PHY.

Optionally, that the packet scheduler determines the queue scheduling periodicity based on the data transmission periodicity of the PHY includes: The packet scheduler determines the queue scheduling periodicity based on the data transmission periodicity of the PHY and a preset parameter. The preset parameter is configurable.

Optionally, the queue scheduling periodicity is equal to a product of the data transmission periodicity of the PHY and the preset parameter.

Optionally, the queue scheduling periodicity is equal to the data transmission periodicity of the PHY.

Optionally, the data transmission periodicity of the PHY is an integer multiple of the queue scheduling periodicity.

Optionally, that the packet scheduler schedules the plurality of packet queues based on the queue scheduling periodicity includes: The packet scheduler schedules the plurality of packet queues based on the first indication information and the queue scheduling periodicity.

Optionally, a start boundary of an initial queue scheduling periodicity used when the packet scheduler schedules the plurality of packet queues is aligned with a boundary of the data transmission periodicity of the PHY.

According to the technical solution provided in this application, because the PHY periodically transmits data, differences between data transmission periodicities of PHYs of different network devices remain stable, and the start boundary of the initial queue scheduling periodicity used when the packet scheduler schedules the plurality of packet queues is aligned with the boundary of the data transmission periodicity of the PHY, for example, aligned with the first boundary, difference between the queue scheduling periodicity used when the packet scheduler schedules the plurality of packet queues and queue scheduling periodicities of other different network devices can remain stable. In this way, differences between queue scheduling periodicities of different network devices can remain stable.

Optionally, the method further includes: The packet scheduler receives fifth indication information, where the fifth indication information indicates the boundary of the data transmission periodicity of the PHY. The packet scheduler determines that the boundary indicated by the fifth indication information is staggered from a boundary of the queue scheduling periodicity, and the packet scheduler generates an alarm.

According to the technical solution provided in this application, differences between data transmission periodicities of PHYs of different network devices remain stable. When the packet scheduler determines that the boundary of the data transmission periodicity of the PHY is staggered from the boundary of the queue scheduling periodicity, the packet scheduler determines that differences between a queue scheduling periodicity of a network device in which the packet scheduler is located and queue scheduling periodicities of other network devices are unstable, and the packet scheduler generates the alarm, so that a staff member can view scheduling of the plurality of packet queues by the packet scheduler.

Optionally, that the packet scheduler schedules the plurality of packet queues based on the queue scheduling periodicity includes at least one of the following:
performing, by the packet scheduler, packet enqueuing scheduling on the plurality of packet queues based on the queue scheduling periodicity; and
performing, by the packet scheduler, packet dequeuing scheduling on the plurality of packet queues based on the queue scheduling periodicity.

In other words, the packet scheduler stores a packet in the plurality of packet queues based on the queue scheduling periodicity, and/or the packet scheduler forwards, based on the queue scheduling periodicity, the packet stored in the plurality of packet queues.

Optionally, the first indication information includes an alignment marker (alignment marker, AM), a codeword marker (codeword marker, CWM), or a flexible Ethernet (flexible ethernet, FlexE) alignment marker. The second indication information, the third indication information, the fourth indication information, and the fifth indication information each include the AM, the CWM, or the FlexE alignment marker.

Optionally, that a packet scheduler receives first indication information includes: The packet scheduler receives the first indication information sent by the PHY, where the first indication information is generated by the PHY, or the first indication information is sent by a PHY in a previous-hop device of the network device to the PHY in the network device. For example, the network device is a head node on a packet transmission path, and the first indication information is generated by the PHY in the network device. Alternatively, the network device is an intermediate node or a tail node on a packet transmission path, and the first indication information is sent by the PHY in the previous-hop device of the network device to the PHY in the network device.

Optionally, the network device includes a media access group (media access group, MAG) chip, and the MAG chip includes the packet scheduler.

Optionally, the packet scheduler is a media access control (media access control, MAC) packet scheduler.

According to a second aspect, a queue scheduling apparatus is provided, and includes modules configured to perform the queue scheduling method provided in any one of the first aspect or the optional manners of the first aspect. The modules may be implemented based on software, hardware, or a combination of software and hardware, and may be randomly combined or divided based on a specific implementation.

According to a third aspect, a chip is provided, and includes the queue scheduling apparatus provided in the second aspect.

Optionally, the chip includes a MAG chip.

Optionally, the chip includes a programmable logic circuit and/or program instructions. When the chip runs, the chip is configured to implement the queue scheduling method provided in any one of the first aspect or the optional manners of the first aspect.

According to a fourth aspect, a network device is provided, and includes the chip provided in any one of the third aspect or the optional manners of the third aspect.

According to a fifth aspect, a computer-readable storage medium is provided. The computer-readable storage medium stores a computer program. When the computer program is executed, the method provided in any one of the first aspect or the optional manners of the first aspect is implemented.

According to a sixth aspect, a computer program product is provided. The computer program product includes a program or code. When the program or the code is executed, the method provided in any one of the first aspect or the optional manners of the first aspect is implemented.

For technical effects of the second aspect to the sixth aspect, refer to the technical effects of the first aspect. Details are not described herein again.

### BRIEF DESCRIPTION OF DRAWINGS

FIG. 1 is a diagram of an application scenario according to an embodiment of this application;
FIG. 2 is a flowchart of a queue scheduling method according to an embodiment of this application;
FIG. 3 is a diagram of a relationship between data transmission periodicities of PHYs of different network devices according to an embodiment of this application;
FIG. 4 is a diagram of a relationship between a queue scheduling periodicity and a data transmission periodicity of a PHY according to an embodiment of this application;
FIG. 5 is another diagram of a relationship between a queue scheduling periodicity and a data transmission periodicity of a PHY according to an embodiment of this application;
FIG. 6 is a diagram of a relationship between queue scheduling periodicities of different network devices according to an embodiment of this application;
FIG. 7 is a diagram of scheduling a plurality of packet queues according to an embodiment of this application;
FIG. 8 is a flowchart of determining that a data alignment status of a PHY is a locked state according to an embodiment of this application;
FIG. 9 is another flowchart of determining that a data alignment status of a PHY is a locked state according to an embodiment of this application;
FIG. 10 is a diagram of a queue scheduling apparatus according to an embodiment of this application; and
FIG. 11 is a diagram of a network device according to an embodiment of this application.

### DESCRIPTION OF EMBODIMENTS

The development of network technologies promotes industrial automation. In the field of industrial automation, a plurality of industrial Ethernet technologies that provide industrial Ethernet (Ethernet) timeliness are successively formulated in standards such as the international electrotechnical commission (International Electro technical Commission, IEC) 61784 and the IEC 61158 in 2000. These industrial Ethernet technologies are, for example, the Ethernet/an internet protocol (internet protocol, IP), Profinet, an Ethernet control automation technology (Ethernet control automation technology, EtherCAT), and Powerlink. After 2012, a time sensitive network (time sensitive network, TSN) technology gradually improved and defined by the institute of electrical and electronics engineers (Institute of Electrical and Electronics Engineers, IEEE) 802.1 working group is a standard Ethernet communication technology with deterministic network quality, and is applicable to a delay-sensitive service scenario in the field of industrial automation. This can resolve a problem of real-time data transmission, and meet a standardization requirement for interworking among vendor-specific devices. Usually, different industrial industries have varied requirements on an industrial network. However, requirements on the industrial network generally focus on latency, jitter, reliability (which may be represented by a packet loss rate), and other aspects.

In a deterministic network, for example, an industrial network with deterministic network quality, to ensure network quality, a network device usually uses a CQF algorithm provided in the IEEE Std 802.1Qch standard to cyclically schedule a plurality of packet queues according to a pre-planned queue scheduling periodicity and queue scheduling moment (or referred to as a queue switching moment), for packet storage and forwarding. For example, the network device maintains a plurality of packet queues, a pre-planned queue scheduling periodicity, and a pre-planned queue scheduling moment, and the network device performs enqueuing cyclic scheduling on the plurality of packet queues according to the pre-planned queue scheduling periodicity and the pre-planned queue scheduling moment, so that a received packet is buffered into the plurality of packet queues. In addition, the network device performs dequeuing cyclic scheduling on the plurality of packet queues according to the pre-planned queue scheduling periodicity and the pre-planned queue scheduling moment, to forward a packet buffered in the plurality of packet queues. For example, the network device maintains packet queues 1 to 8, a pre-planned queue scheduling periodicity T, a pre-planned enqueuing scheduling moment, and a pre-planned dequeuing scheduling moment (both the enqueuing scheduling moment and the dequeuing scheduling moment are queue scheduling moments), and the network device performs enqueuing cyclic scheduling on the packet queues 1 to 8 according to the pre-planned queue scheduling periodicity T and the pre-planned enqueuing scheduling moment, to buffer a received packet into the packet queues 1 to 8. In addition, the network device performs dequeuing cyclic scheduling on the packet queues 1 to 8 according to the pre-planned queue scheduling periodicity T and the pre-planned dequeuing scheduling moment, to forward a packet buffered in the packet queues 1 to 8.

For example, when the network device performs enqueuing cyclic scheduling on the packet queues 1 to 8, the network device starts to schedule the packet queue 1 at a pre-planned first enqueuing scheduling moment, duration in which the network device schedules the packet queue 1 reaches duration of one queue scheduling periodicity T (for example, referred to as a 1^{st} queue scheduling periodicity), and the network device buffers, into the packet queue 1, all packets received in the 1^{st} queue scheduling periodicity. At an end moment of the 1^{st} queue scheduling periodicity (for example, referred to as a second enqueuing scheduling moment), the network device ends the scheduling of the packet queue 1 and starts to schedule the packet queue 2, duration in which the network device schedules the packet queue 2 reaches duration of one queue scheduling periodicity T (for example, referred to as a 2^{nd} queue scheduling periodicity), and the network device buffers, into the packet queue 2, all packets received in the 2^{nd} queue scheduling periodicity. At an end moment of the 2^{nd} queue scheduling periodicity (for example, referred to as a third enqueuing scheduling moment), the network device ends the scheduling of the packet queue 2 and starts to schedule the packet queue 3, duration in which the network device schedules the packet queue 3 reaches duration of one queue scheduling periodicity T (for example, referred to as a 3^{rd} queue scheduling periodicity), and the network device buffers, into to the packet queue 3, all packets received in the 3^{rd} queue scheduling periodicity. The rest is deduced by analogy. At an end moment of a queue scheduling periodicity for scheduling the packet queue 8, the network device ends the scheduling of the packet queue 8, and continues to start to schedule the packet queue 1. The network device cyclically performs the foregoing enqueuing scheduling process, to perform enqueuing cyclic scheduling on the packet queues 1 to 8.

For example, when the network device performs dequeuing cyclic scheduling on the packet queues 1 to 8, the network device starts to schedule the packet queue 1 at a pre-planned first dequeuing scheduling moment, duration in which the network device schedules the packet queue 1 reaches duration of one queue scheduling periodicity T (for example, referred to as a 1^{st} queue scheduling periodicity), and the network device forwards, in the 1^{st} queue scheduling periodicity, a packet buffered in the packet queue 1. At an end moment of the 1^{st} queue scheduling periodicity (for example, referred to as a second dequeuing scheduling moment), the network device ends the scheduling of the packet queue 1 and starts to schedule the packet queue 2, duration in which the network device schedules the packet queue 2 reaches duration of one queue scheduling periodicity T (for example, referred to as a 2^{nd} queue scheduling periodicity), and the network device forwards, in the 2^{nd} queue scheduling periodicity, a packet buffered in the packet queue 2. At an end moment of the 2^{nd} queue scheduling periodicity (for example, referred to as a third dequeuing scheduling moment), the network device ends the scheduling of the packet queue 2 and starts to schedule the packet queue 3, duration in which the network device schedules the packet queue 3 reaches duration of one queue scheduling periodicity T (for example, referred to as a 3^{rd} queue scheduling periodicity), and the network device forwards, in the 3^{rd} queue scheduling periodicity, a packet buffered in the packet queue 3. The rest is deduced by analogy. The network device ends the scheduling of the packet queue 8 at an end moment of a queue scheduling periodicity for scheduling the packet queue 8, and continues to start to schedule the packet queue 1. The network device cyclically performs the foregoing dequeuing scheduling process, to perform dequeuing cyclic scheduling on the packet queues 1 to 8.

However, in the CQF algorithm, both the queue scheduling periodicity and the queue scheduling moment are pre-planned. Therefore, when the CQF algorithm is applied, clock synchronization on network-wide network devices is needed, and a clock synchronization system needs to be deployed in the network-wide network devices. This has a high requirement on the network device, and costs and prices of deploying the clock synchronization system in the network device are high. Consequently, costs and prices of the CQF algorithm during application are high, and practicability is poor. A synchronization precision of the clock synchronization system directly affects network bandwidth utilization. If the synchronization precision of the clock synchronization system is low, a network bandwidth is wasted.

To resolve problems in the CQF algorithm, two improvement solutions are proposed in the industry: a cycle label queuing and forwarding (cycle specified queuing and forwarding, CSQF) algorithm and a deterministic IP algorithm. In the two improvement algorithms, a network device performs enqueuing cyclic scheduling on a plurality of packet queues based on a pre-learned mapping relationship between a label and a packet queue, and performs dequeuing cyclic scheduling on the plurality of packet queues based on a pre-planned queue scheduling periodicity and a pre-planned queue scheduling moment. For example, the network device maintains packet queues 1 to 8, a mapping relationship between a label and a packet queue, a pre-planned queue scheduling periodicity T, and a pre-planned queue scheduling moment. The network device performs enqueuing cyclic scheduling on the packet queues 1 to 8 based on a label carried in a received packet and the mapping relationship, to buffer the received packet into the packet queues 1 to 8. In addition, the network device performs dequeuing cyclic scheduling on the packet queues 1 to 8 according to the pre-planned queue scheduling periodicity T and the pre-planned queue scheduling moment, to forward a packet buffered in the packet queues 1 to 8. For example, the packet queues 1 to 8 sequentially correspond to labels 1 to 8 (an example in which one packet queue corresponds to one label is used herein, and during actual application, one packet queue may correspond to a plurality of labels). When the network device performs enqueuing cyclic scheduling on the packet queues 1 to 8, the network device buffers, into the packet queue 1, a received packet carrying the label 1, buffers, into the packet queue 2, a received packet carrying the label 2, and buffers, into the packet queue 3, a received packet carrying the label 3. The rest is deduced by analogy. For a process in which the network device performs dequeuing cyclic scheduling on the packet queues 1 to 8, refer to the dequeuing cyclic scheduling process in the CQF algorithm. Details are not described herein again.

However, in the CSQF algorithm and the deterministic IP algorithm, in the foregoing learning phase of the mapping relationship between the label and the packet queue, clock synchronization on network-wide network devices is needed. In addition, the network device still needs to perform dequeuing cyclic scheduling according to the pre-planned queue scheduling periodicity and the pre-planned queue scheduling moment. In the CSQF algorithm and the deterministic IP algorithm the clock synchronization on the network-wide network devices is still needed, a clock synchronization system still needs to be deployed in the network device, a requirement on the network device is still high, costs and prices are still high, practicability is poor, and a network bandwidth is easily wasted.

In view of problems in the CQF algorithm, the CSQF algorithm, the deterministic IP algorithm, and the like, embodiments of this application provide a queue scheduling method and apparatus. A network device includes a packet scheduler and a PHY. The PHY periodically transmits data and indication information indicating a boundary of a data transmission periodicity of the PHY. PHYs of network-wide network devices periodically transmit data based on the indication information, so that differences between data transmission periodicities of PHYs of different network devices remain stable. The packet scheduler determines a queue scheduling periodicity based on the indication information indicating the boundary of the data transmission periodicity of the PHY in the network device in which the packet scheduler is located, and schedules a plurality of packet queues based on the queue scheduling periodicity. A process in which the packet scheduler determines the queue scheduling periodicity and a process in which the packet queue is scheduled based on the queue scheduling periodicity do not depend on clock synchronization. Therefore, clock synchronization does not need to be performed on a network device, a requirement on the network device is low, implementation costs are low, practicability is high, and no network bandwidth is wasted. In this application, the packet queue can be periodically scheduled without deployment of a clock synchronization system in the network device, and differences between the queue scheduling periodicities of different network devices can remain stable. For example, lengths of the queue scheduling periodicities of the different network devices are equal, and time differences between boundaries of the queue scheduling periodicities of the different network devices remain stable. This avoids a shift problem of the queue scheduling periodicities of the different network devices (in other words, the differences between the queue scheduling periodicities of the different network devices are unstable) caused by clock errors.

The following describes the technical solutions of this application, and first describes an application scenario of this application.

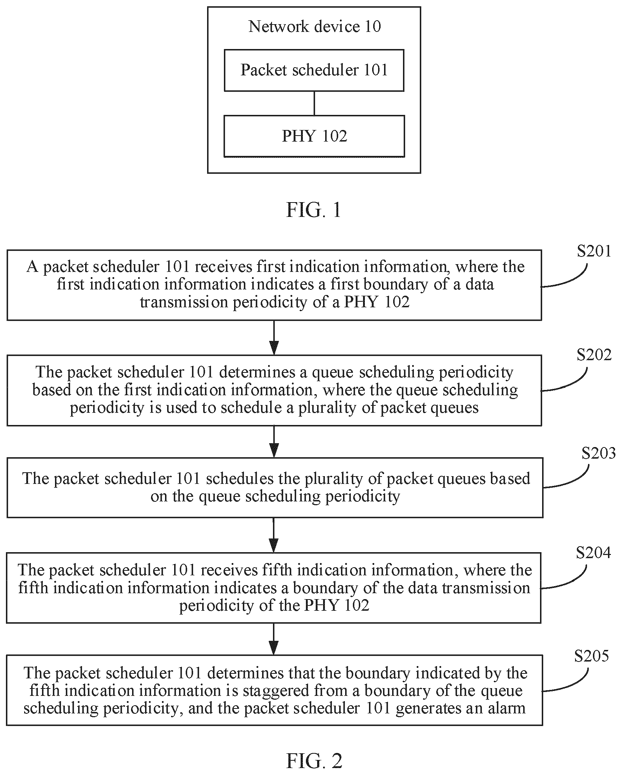

FIG. 1 is a diagram of an application scenario according to an embodiment of this application. The application scenario relates to an internal system of a network device 10, and the network device 10 is any network device in a communication network. As shown in FIG. 1, the network device 10 includes a packet scheduler 101 and a PHY 102. The packet scheduler 101 is communicatively connected to the PHY 102. Optionally, the network device 10 includes a MAG chip (not shown in FIG. 1). The MAG chip includes the packet scheduler 101. The MAG chip is communicatively connected to the PHY 102, so that the packet scheduler 101 is communicatively connected to the PHY 102.

The packet scheduler 101 maintains a plurality of packet queues, and the packet scheduler 101 is configured to schedule the plurality of packet queues based on a queue scheduling periodicity. For example, the packet scheduler 101 is configured to perform packet enqueuing scheduling on the plurality of packet queues based on the queue scheduling periodicity, to buffer, into the plurality of packet queues, a packet received by the network device 10. In addition, the packet scheduler 101 is configured to perform packet dequeuing scheduling on the plurality of packet queues based on the queue scheduling periodicity, to forward a packet buffered in the plurality of packet queues. Before scheduling the plurality of packet queues, the packet scheduler 101 may first determine the queue scheduling periodicity.

The PHY 102 is a PHY chip. The PHY 102 periodically transmits data and indication information indicating a boundary of a data transmission periodicity of the PHY 102, and differences between the data transmission periodicity of the PHY 102 and data transmission periodicities of PHY of other network devices remain stable. The packet scheduler 101 may determine the queue scheduling periodicity based on the data transmission periodicity of the PHY 102 (that is, a periodicity of transmitting the data by the PHY 102), to schedule the plurality of packet queues based on the queue scheduling periodicity, so that differences between the queue scheduling periodicity of the network device 10 and queue scheduling periodicities of other network devices remain stable. For example, the packet scheduler 101 determines a boundary of the queue scheduling periodicity based on the boundary of the data transmission periodicity of the PHY 102, and/or the packet scheduler 101 determines a length of the queue scheduling periodicity based on a length of the data transmission periodicity of the PHY 102. The queue scheduling periodicity is equal to the data transmission periodicity of the PHY 102 (in other words, the length of the queue scheduling periodicity is equal to the length of the data transmission periodicity of the PHY 102), or the data transmission periodicity of the PHY 102 is an integer multiple of the queue scheduling periodicity (in other words, the length of the data transmission periodicity of the PHY 102 is an integer multiple of the length of the queue scheduling periodicity). For example, the queue scheduling periodicity is equal to a product of the data transmission periodicity of the PHY 102 and a preset parameter. The preset parameter is configurable, and the preset parameter is less than or equal to 1 and greater than 0.

The packet scheduler 101 is a layer 2 packet scheduler or a layer 3 packet scheduler. The layer 2 packet scheduler may be a MAC packet scheduler. The layer 2 packet scheduler is configured to schedule a plurality of packet queues based on layer 2 information of a packet. The layer 3 packet scheduler is configured to schedule a plurality of packet queues based on layer 3 information of the packet. The indication information indicating the boundary of the data transmission periodicity of the PHY 102 may be alignment information such as an AM, a CWM, or a FlexE alignment marker, or indication information indicating the AM, the CWM, the FlexE alignment marker, or the like. Both the AM and the CWM are alignment information transmitted through Ethernet interfaces. In addition, the AM is alignment information transmitted through a 40GE Ethernet interface or a 100GE Ethernet interface, and the CWM is alignment information transmitted through a 25GE Ethernet interface. The FlexE alignment marker is alignment information transmitted through a FlexE interface, and the FlexE alignment marker is also referred to as a FlexE overhead (FlexE overhead). The 40GE Ethernet interface means that a transmission rate of the Ethernet interface is 40 Gbps (gigabyte per second), the 100GE Ethernet interface means that a transmission rate of the Ethernet interface is 100 Gbps, and the 25GE Ethernet interface means that a transmission rate of the Ethernet interface is 25 Gbps.

The AM, the CWM, and the FlexE alignment marker described in this application are merely examples of the alignment information. The alignment information described in this application may be various possible alignment information that is defined in an existing standard and that indicates the boundary of the data transmission periodicity of the PHY, or may be alignment information that is defined in various future evolved standards and that indicates the boundary of the data transmission periodicity of the PHY. In addition, the alignment information may have different names in different standards. For details, refer to related standards.

The foregoing describes the application scenario of this application, and the following describes an embodiment of a queue scheduling method in this application.

FIG. 2 is a flowchart of a queue scheduling method according to an embodiment of this application. The queue scheduling method is applied to a network device, the network device includes a packet scheduler and a PHY, and the queue scheduling method is performed by the packet scheduler. For example, the queue scheduler is the queue scheduler 101 in FIG. 1, and the PHY is the PHY 102 in FIG. 1. The following uses an example in which the queue scheduling method is applied to the network device 10 shown in FIG. 1 for description. The method includes the following steps S201 to S203.

S201: The packet scheduler 101 receives first indication information, where the first indication information indicates a first boundary of a data transmission periodicity of the PHY 102.

In an optional embodiment, the packet scheduler 101 receives the first indication information sent by the PHY 102. The PHY 102 may send the first indication information to the packet scheduler 101 by using an out-of-band signal. For example, the PHY 102 sends a first out-of-band signal to the packet scheduler 101, where the first out-of-band signal carries the first indication information, and the packet scheduler 101 receives the first out-of-band signal sent by the PHY 102. The first indication information is alignment information such as an AM, a CWM, or a FlexE alignment marker, or the first indication information is indication information indicating the AM, the CWM, the FlexE alignment marker, or the like. This is not limited in this embodiment of this application.

In this embodiment of this application, the first indication information is generated by the PHY 102, or the first indication information is sent to the PHY 102 by a PHY in a previous-hop device of the network device 10 in which the PHY 102 is located. In an optional embodiment, the network device 10 is a head node on a packet transmission path, and the PHY 102 generates the first indication information based on the data transmission periodicity of the PHY 102, and sends the first indication information to the packet scheduler 101. In another optional embodiment, the network device 10 is an intermediate node or a tail node on a packet transmission path. The PHY 102 receives the first indication information sent by the PHY in the previous-hop device of the network device 10, and sends the first indication information to the packet scheduler 101. In the two optional embodiments, the PHY 102 may further send the first indication information to a PHY of a next-hop device of the network device 10, so that the PHY of the next-hop device determines the boundary of the data transmission periodicity of the PHY 102. Then, a data transmission periodicity of the PHY of the next-hop device is determined based on the boundary of the data transmission periodicity of the PHY 102. In other words, a PHY of each network device other than the head node may receive indication information from a PHY of a previous-hop device of each network device, determine a data transmission periodicity of the PHY of each network device based on the indication information sent by the PHY of the previous-hop device, and send the indication information to a PHY of a next-hop device of each network device, so that the PHY of the next-hop device determines a data transmission periodicity of the PHY of the next-hop device based on the indication information. In this manner, differences between data transmission periodicities of PHYs of different network devices remain stable. For example, lengths of the data transmission periodicities of the PHYs of the different network devices are equal, and time differences between boundaries of the data transmission periodicities of the PHYs of the different network devices remain stable. Optionally, a PHY of each network device sends, at a start moment of each data transmission periodicity (corresponding to a start boundary of each data transmission periodicity) of the PHY, indication information to a PHY of a next-hop device of each network device, to indicate a boundary (for example, the start boundary) of each data transmission periodicity. In each data transmission periodicity, the PHY of each network device sends a data block to the PHY of the next-hop device of each network device.

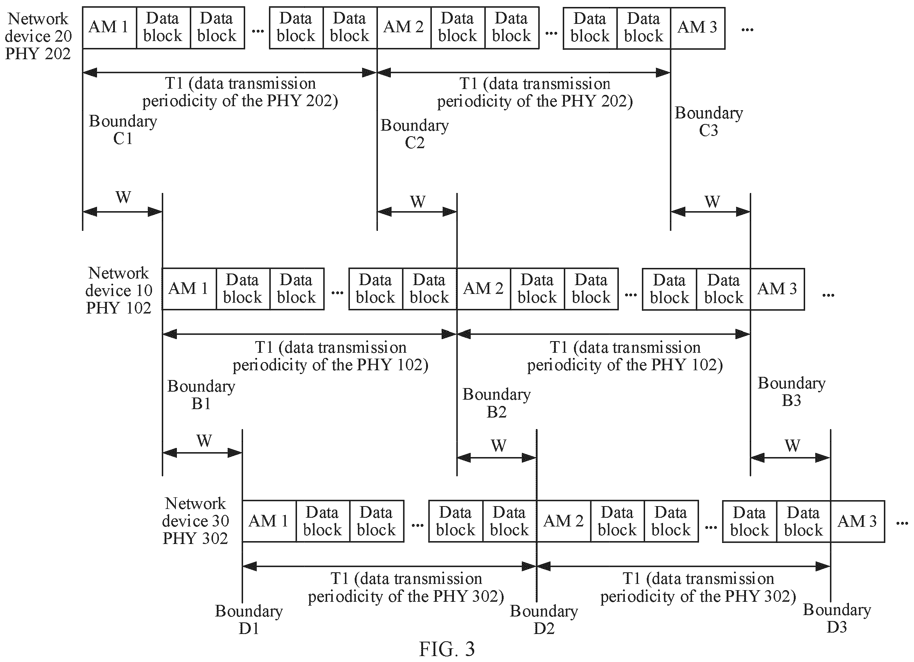

For example, a network device 20 is the previous-hop device of the network device 10, and a network device 30 is the next-hop device of the network device 10. An example in which an AM indicates the boundary of the data transmission periodicity of the PHY is used for description. A PHY (for example, referred to as a PHY 202) of the network device 20 periodically sends, at a start moment of each data transmission periodicity of the PHY 202, a data block to the PHY 102 of the network device 10. The PHY 202 sends an AM to the PHY 102, to indicate a boundary (which is specifically a start boundary) of each data transmission periodicity. The PHY 102 determines the boundary of the data transmission periodicity of the PHY 202 based on the AM sent by the PHY 202, determines the boundary of the data transmission periodicity of the PHY 102 based on the boundary of the data transmission periodicity of the PHY 202, and determines the data transmission periodicity of the PHY 102. In addition, the PHY 102 sends, at a start moment of each data transmission periodicity of the PHY 102, a data block to a PHY (for example, referred to as a PHY 302) of the network device 30 based on the data transmission periodicity of the PHY 102, and the PHY 102 sends an AM to the PHY 302, to indicate a boundary (which is specifically a start boundary) of each data transmission periodicity. The PHY 302 determines the boundary of the data transmission periodicity of the PHY 102 based on the AM sent by the PHY 102, determines a boundary of a data transmission periodicity of the PHY 302 based on the boundary of the data transmission periodicity of the PHY 102, and determines the data transmission periodicity of the PHY 302. In addition, the PHY 302 sends a data block to a PHY of a next-hop device of the network device 30 based on the data transmission periodicity of the PHY 302, and the PHY 302 sends, at a start moment of each data transmission periodicity of the PHY 302, an AM to the PHY of the next-hop device, to indicate a boundary (which is specifically a start boundary) of each data transmission periodicity. The rest is deduced by analogy. Finally, differences between data transmission periodicities of the PHY 202, the PHY 102, and the PHY 302 remain stable. For example, lengths of the data transmission periodicities of the PHY 202, the PHY 102, and the PHY 302 are equal, and time differences between boundaries of the data transmission periodicities of the PHY 202, the PHY 102, and the PHY 302 remain stable. For example, as shown in FIG. 3, AMs are sequentially transmitted between the PHY 202, the PHY 102, and the PHY 302, so that the data transmission periodicities of the PHY 202, the PHY 102, and the PHY 302 are equal (all are T1). In addition, both a time difference between the boundary of the data transmission periodicity of the PHY 102 and the boundary of the data transmission periodicity of the PHY 202 and a time difference between the boundary of the data transmission periodicity of the PHY 302 and the boundary of the data transmission periodicity of the PHY 102 remain stable. As shown in FIG. 3, an AM 1 indicates a start boundary of a 1^{st} data transmission periodicity, an AM 2 indicates a start boundary of a 2^{nd} data transmission periodicity, and an AM 3 indicates a start boundary of a 3^{rd} data transmission periodicity. The rest is deduced by analogy. A time difference between a start boundary B1 of a 1^{st} data transmission periodicity of the PHY 102 and a start boundary C1 of a 1^{st} data transmission periodicity of the PHY 202, a time difference between a start boundary B2 of a 2^{nd} data transmission periodicity of the PHY 102 and a start boundary C2 of a 2^{nd} data transmission periodicity of the PHY 202, and a time difference between a start boundary B3 of a 3^{rd} data transmission periodicity of the PHY 102 and a start boundary C3 of a 3^{rd} data transmission periodicity of the PHY 202 are all W. A time difference between a start boundary D1 of a 1^{st} data transmission periodicity of the PHY 302 and the start boundary B1 of the 1^{st} data transmission periodicity of the PHY 102, a time difference between a start boundary D2 of a 2^{nd} data transmission periodicity of the PHY 302 and the start boundary B2 of the 2^{nd} data transmission periodicity of the PHY 102, and a time difference between a start boundary D3 of a 3^{rd} data transmission periodicity of the PHY 302 and the start boundary B3 of the 3^{rd} data transmission periodicity of the PHY 102 are all W. That is, time differences between boundaries of the data transmission periodicity of the PHY 102 and boundaries of the data transmission periodicity of the PHY 202 remain stable.

It should be noted that FIG. 3 is merely an example. During actual application, one PHY may include a plurality of transmission channels, each transmission channel is used to periodically transmit a data block, and data transmission periodicities of a plurality of transmission channels of a same PHY are aligned, in other words, boundaries of the data transmission periodicities of the plurality of transmission channels of the same PHY are in one-to-one correspondence with a same moment. In addition, alignment markers of the data transmission periodicities of the plurality of transmission channels of the same PHY may also be information such as AMs or CWMs transmitted through an Ethernet interface, or FlexE alignment markers transmitted through a FlexE interface. This is not limited in this embodiment of this application.

S202: The packet scheduler 101 determines a queue scheduling periodicity based on the first indication information, where the queue scheduling periodicity is used to schedule a plurality of packet queues.

In an optional embodiment, the packet scheduler 101 determines the first boundary of the data transmission periodicity of the PHY 102 based on the first indication information, and the packet scheduler 101 determines the queue scheduling periodicity based on the first boundary. A length of the queue scheduling periodicity is a preset length, or the packet scheduler 101 determines a length of the queue scheduling periodicity based on a length of the data transmission periodicity of the PHY 102. Therefore, the packet scheduler 101 determines the queue scheduling periodicity based on the first indication information in the following two implementations.

Implementation 1: The length of the queue scheduling periodicity is the preset length, and the packet scheduler 101 determines the queue scheduling periodicity based on the first indication information and the preset length of the queue scheduling periodicity.

Optionally, the packet scheduler 101 determines the first boundary of the data transmission periodicity of the PHY 102 based on the first indication information. The packet scheduler 101 determines a boundary of the queue scheduling periodicity based on the first boundary, and further determines the queue scheduling periodicity based on the boundary of the queue scheduling periodicity and the preset length of the queue scheduling periodicity. A boundary of the queue scheduling periodicity is aligned with the first boundary, or there is a fixed time difference between a boundary of the queue scheduling periodicity and the first boundary. Herein, an example in which a boundary of the queue scheduling periodicity is aligned with the first boundary is used for description. For example, a start boundary of the queue scheduling periodicity is aligned with the first boundary. In other words, the packet scheduler 101 determines the first boundary as the start boundary of the queue scheduling periodicity. For example, the packet scheduler 101 determines the first boundary as a start boundary of a queue scheduling periodicity (for example, an initial queue scheduling periodicity).

Implementation 2: The packet scheduler 101 determines the length of the queue scheduling periodicity based on the length of the data transmission periodicity of the PHY 102, and the packet scheduler 101 determines the queue scheduling periodicity based on the first indication information and the length of the queue scheduling periodicity.

In an optional embodiment, the packet scheduler 101 determines the queue scheduling periodicity based on the first indication information and fourth indication information. The fourth indication information indicates a fourth boundary of the data transmission periodicity of the PHY 102, and the fourth boundary is adjacent to the first boundary. For example, the packet scheduler 101 determines the data transmission periodicity of the PHY 102 based on the first indication information and the fourth indication information, and further determines the queue scheduling periodicity based on the data transmission periodicity of the PHY 102. In an example, the packet scheduler 101 determines a boundary of the queue scheduling periodicity based on the first boundary indicated by the first indication information or the fourth boundary indicated by the fourth indication information. The packet scheduler 101 determines the length of the data transmission periodicity of the PHY 102 based on the first boundary and the fourth boundary, and determines the length of the queue scheduling periodicity based on the length of the data transmission periodicity of the PHY 102. In addition, the packet scheduler 101 determines the queue scheduling periodicity based on the boundary of the queue scheduling periodicity and the length of the queue scheduling periodicity. A boundary of the queue scheduling periodicity is aligned with the first boundary, a boundary of the queue scheduling periodicity is aligned with the fourth boundary, there is a fixed time difference between a boundary of the queue scheduling periodicity and the first boundary, or there is a fixed time difference between a boundary of the queue scheduling periodicity and the fourth boundary. Herein, an example in which a boundary of the queue scheduling periodicity is aligned with the first boundary is used for description. For example, a start boundary of the queue scheduling periodicity is aligned with the first boundary. In other words, the packet scheduler 101 determines the first boundary as the start boundary of the queue scheduling periodicity. For example, the packet scheduler 101 determines the first boundary as a start boundary of a queue scheduling periodicity (for example, an initial queue scheduling periodicity).

In an optional embodiment, in Implementation 2, the packet scheduler 101 determines the queue scheduling periodicity based on the data transmission periodicity of the PHY 102 and a preset parameter. For example, the packet scheduler 101 determines the length of the queue scheduling periodicity based on the length of the data transmission periodicity of the PHY 102 and the preset parameter. For example, the queue scheduling periodicity is equal to a product of the data transmission periodicity of the PHY 102 and the preset parameter. The preset parameter is less than or equal to 1 and greater than 0, and the preset parameter is configurable.

In an optional embodiment, before determining the queue scheduling periodicity based on the first indication information and the fourth indication information, the packet scheduler 101 receives the fourth indication information. For example, the packet scheduler 101 receives a fourth out-of-band signal sent by the PHY 102, where the fourth out-of-band signal carries the fourth indication information. The fourth indication information is alignment information such as an AM, a CWM, or a FlexE alignment marker, or may be indication information indicating the alignment information such as the AM, the CWM, or the FlexE alignment marker. The fourth indication information may be generated by the PHY 102, or may be sent to the PHY 102 by the PHY in the previous-hop device of the network device 10 in which the PHY 102 is located. This is not limited in this embodiment of this application.

It can be learned from the foregoing descriptions of S202 that the packet scheduler 101 determines the queue scheduling periodicity based on the boundary of the data transmission periodicity of the PHY 102. In this embodiment of this application, the queue scheduling periodicity is equal to the data transmission periodicity of the PHY 102, or the data transmission periodicity of the PHY 102 is an integer multiple of the queue scheduling periodicity. In addition, a boundary of the queue scheduling periodicity is aligned with a boundary of the data transmission periodicity of the PHY 102. For example, the start boundary of the initial queue scheduling periodicity is aligned with the first boundary of the data transmission periodicity of the PHY 102. The queue scheduling periodicity being equal to the data transmission periodicity of the PHY 102 means that the length of the queue scheduling periodicity is equal to the length of the data transmission periodicity of the PHY 102. The data transmission periodicity of the PHY 102 being an integer multiple of the queue scheduling periodicity means that the length of the data transmission periodicity of the PHY 102 is an integer multiple of the length of the queue scheduling periodicity.

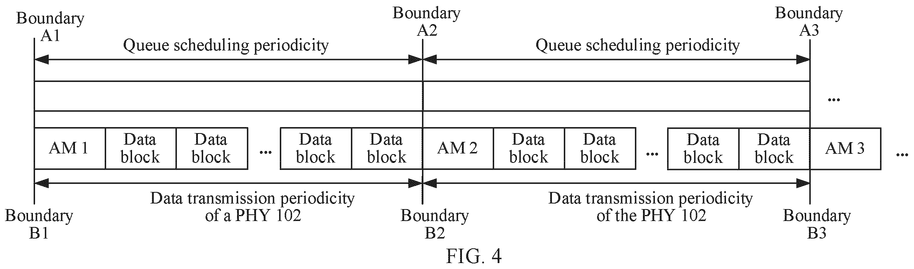

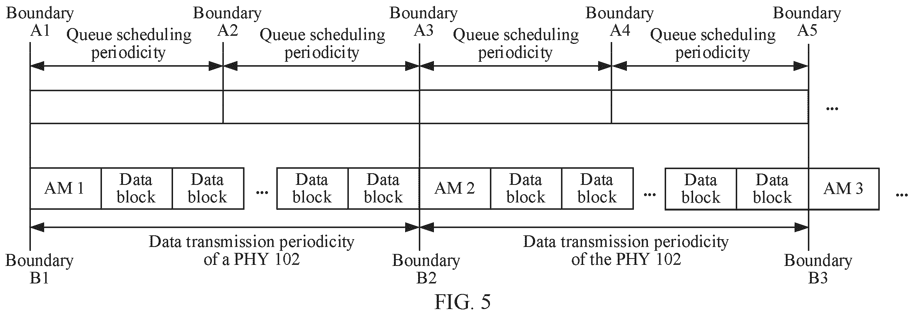

For example, FIG. 4 and FIG. 5 each are a diagram of a relationship between queue scheduling periodicities and data transmission periodicities of the PHY 102 according to an embodiment of this application. As shown in FIG. 4, the length of the queue scheduling periodicity is equal to the length of the data transmission periodicity of the PHY 102, and the start boundary of the queue scheduling periodicity is aligned with the start boundary of the data transmission periodicity of the PHY 102 in one-to-one correspondence. For example, a start boundary A1 of an initial queue scheduling periodicity (namely, a 1^{st} queue scheduling periodicity) is aligned with the start boundary B1 of the initial data transmission periodicity (namely, the 1^{st} data transmission periodicity) of the PHY 102, a start boundary A2 of a 2^{nd} queue scheduling periodicity is aligned with the start boundary B2 of the 2^{nd} data transmission periodicity of the PHY 102, and a start boundary A3 of a 3^{rd} queue scheduling periodicity is aligned with the start boundary B3 of the 3^{rd} data transmission periodicity of the PHY 102. The rest is deduced by analogy. As shown in FIG. 5, the length of the data transmission periodicity of the PHY 102 is twice the length of the queue scheduling periodicity, and a start boundary of a (2i-1)^{th} queue scheduling periodicity is aligned with a start boundary of an i^{th} data transmission periodicity of the PHY 102, where i is an integer greater than or equal to 1. For example, a start boundary A1 of a 1^{st} queue scheduling periodicity is aligned with the start boundary B1 of the 1^{st} data transmission periodicity of the PHY 102, a start boundary A3 of the 3^{rd} queue scheduling periodicity is aligned with the start boundary B2 of the 2^{nd} data transmission periodicity of the PHY 102, and a start boundary A5 of a 5^{th} queue scheduling periodicity is aligned with the start boundary B3 of the 3^{rd} data transmission periodicity of the PHY 102. The rest is deduced by analogy.

FIG. 4 and FIG. 5 show only examples of the relationships between the queue scheduling periodicity and the data transmission periodicity of the PHY 102. There may be another relationship between the queue scheduling periodicity and the data transmission periodicity of the PHY 102. For example, the length of the data transmission periodicity of the PHY 102 is three times, four times, five times, or the like the length of the queue scheduling periodicity. For another example, there is a fixed time difference between the start boundary of the queue scheduling periodicity and the start boundary of the data transmission periodicity of the PHY 102. This is not limited in embodiments of this application.

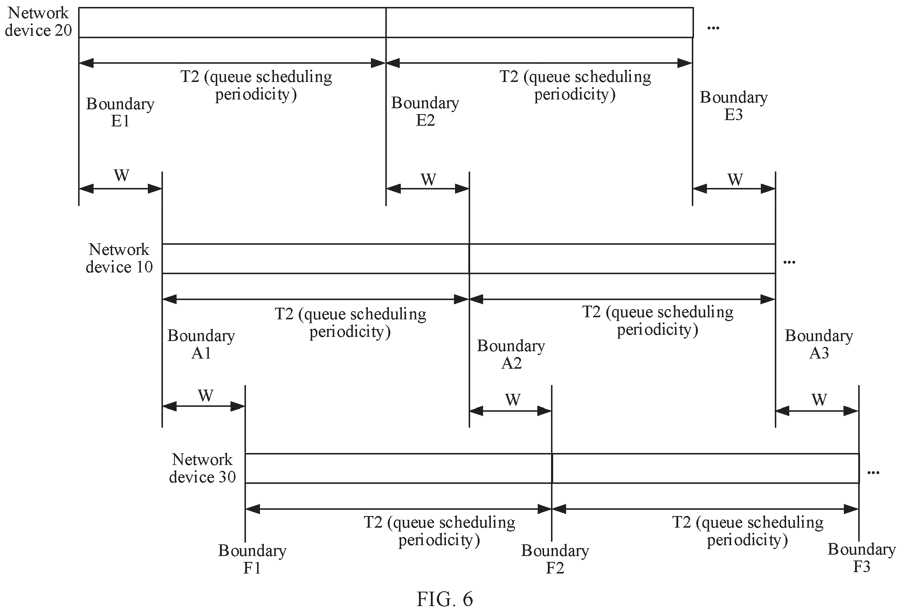

In addition, it should be noted that because the differences between the data transmission periodicities of the PHYs of the different network devices remain stable, a packet scheduler of each network device determines a queue scheduling periodicity of the network device based on the data transmission periodicity of the PHY in the network device, and there is the foregoing alignment relationship (for example, the alignment relationship shown in FIG. 4 or FIG. 5) between a queue scheduling periodicity of the same network device and the data transmission periodicity of the PHY in the network device, differences between queue scheduling periodicities of the different network devices also remain stable. For example, FIG. 6 is a diagram of a relationship between queue scheduling periodicities of the network device 20, the network device 10, and the network device 30. Lengths of the queue scheduling periodicities of the network device 20, the network device 10, and the network device 30 are equal (all are T2), and time differences between boundaries of the queue scheduling periodicities of the network device 20, the network device 10, and the network device 30 remain stable. For example, a time difference between a start boundary A1 of the 1^{st} queue scheduling periodicity of the network device 10 and a start boundary E1 of a 1^{st} queue scheduling periodicity of the network device 20, a time difference between a start boundary A2 of the 2^{nd} queue scheduling periodicity of the network device 10 and a start boundary E2 of a 2^{nd} queue scheduling periodicity of the network device 20, and a time difference between a start boundary A3 of the 3^{rd} queue scheduling periodicity of the network device 10 and a start boundary E3 of a 3^{rd} queue scheduling periodicity of the network device 20 are all X. A time difference between a start boundary F1 of a 1^{st} queue scheduling periodicity of the network device 30 and the start boundary A1 of the 1^{st} queue scheduling periodicity of the network device 10, a time difference between a start boundary F2 of a 2^{nd} queue scheduling periodicity of the network device 30 and the start boundary A2 of the 2^{nd} queue scheduling periodicity of the network device 10, and a time difference between a start boundary F3 of a 3^{rd} queue scheduling periodicity of the network device 30 and the start boundary A3 of the 3^{rd} queue scheduling periodicity of the network device 10 are all W.

S203: The packet scheduler 101 schedules the plurality of packet queues based on the queue scheduling periodicity.

In an optional embodiment, the packet scheduler 101 schedules the plurality of packet queues based on the first indication information and the queue scheduling periodicity. A start boundary of an initial queue scheduling periodicity used when the packet scheduler 101 schedules the plurality of packet queues is aligned with a boundary of the data transmission periodicity of the PHY 102. For example, the start boundary of the initial queue scheduling periodicity used when the packet scheduler 101 schedules the plurality of packet queues is aligned with the start boundary of the initial data transmission periodicity of the PHY 102. For another example, the start boundary of the initial queue scheduling periodicity used when the packet scheduler 101 schedules the plurality of packet queues is aligned with the first boundary indicated by the first indication information. The first boundary may be the start boundary of the initial data transmission periodicity of the PHY 102, or may not be the start boundary of the initial data transmission periodicity of the PHY 102. This is not limited in this embodiment of this application.

An example in which the plurality of packet queues are m packet queues 1 to m, and the start boundary of the initial queue scheduling periodicity used when the packet scheduler 101 schedules the plurality of packet queues is aligned with the first boundary is used for description. m is a positive integer greater than 1, for example, m is equal to 8. For example, starting from the first boundary (in other words, starting from a moment corresponding to the first boundary), the packet scheduler 101 sequentially and cyclically schedules the packet queues 1 to m based on the length of the queue scheduling periodicity. In an example, a process in which the packet scheduler 101 cyclically schedules the m packet queues includes: The packet scheduler 101 starts to schedule the packet queue 1 from the first boundary, and duration in which the packet scheduler 101 schedules the packet queue 1 reaches duration of one queue scheduling periodicity (for example, referred to as a 1^{st} queue scheduling periodicity). At an end moment of the 1^{st} queue scheduling periodicity, the packet scheduler 101 ends the scheduling of the packet queue 1 and starts to schedule the packet queue 2 (in other words, at the end moment of the 1^{st} queue scheduling periodicity, the packet scheduler 101 switches from the packet queue 1 to the packet queue 2, and the end moment of the 1^{st} queue scheduling periodicity is a switching moment from the packet queue 1 to the packet queue), and duration in which the packet scheduler 101 schedules the packet queue 2 reaches duration of one queue scheduling periodicity (for example, referred to as a 2^{nd} queue scheduling periodicity). At an end moment of the 2^{nd} queue scheduling periodicity, the packet scheduler 101 ends the scheduling of the packet queue 2 and starts to schedule the packet queue 3, and duration in which the packet scheduler 101 schedules the packet queue 3 reaches duration of one queue scheduling periodicity (for example, referred to as a 3^{rd} queue scheduling periodicity). The rest is deduced by analogy. At an end moment of a queue scheduling periodicity for scheduling the packet queue m, the packet scheduler 101 ends the scheduling of the packet queue 8, and continues to sequentially schedule the packet queues 1 to m. This is repeated. The packet scheduler 101 sequentially and cyclically schedules the packet queues 1 to m based on the queue scheduling periodicity.

In an optional embodiment, the packet scheduler 101 performs packet enqueuing scheduling on the plurality of packet queues based on the queue scheduling periodicity; and/or the packet scheduler 101 performs packet dequeuing scheduling on the plurality of packet queues based on the queue scheduling periodicity. The foregoing descriptions of S203 are applicable to performing packet enqueuing scheduling on the plurality of packet queues and performing packet dequeuing scheduling on the plurality of packet queues. In other words, the packet scheduler 101 performs packet enqueuing scheduling on the plurality of packet queues based on the first indication information and the queue scheduling periodicity; and/or the packet scheduler 101 performs packet dequeuing scheduling on the plurality of packet queues based on the first indication information and the queue scheduling periodicity. In an example, starting from the first boundary, the packet scheduler 101 sequentially performs packet enqueuing cyclic scheduling on the packet queues 1 to m based on the length of the queue scheduling periodicity, and starting from the first boundary, the packet scheduler 101 sequentially performs packet dequeuing cyclic scheduling on the packet queues 1 to m based on the length of the queue scheduling periodicity.

A process in which the packet scheduler 101 performs packet enqueuing cyclic scheduling on the packet queues 1 to m includes: The packet scheduler 101 starts to perform packet enqueuing scheduling on the packet queue 1 from the first boundary, duration in which the packet scheduler 101 schedules the packet queue 1 reaches duration of one queue scheduling periodicity (for example, referred to as a 1^{st} queue scheduling periodicity), and the packet scheduler 101 buffers, into the packet queue 1, a packet received in the 1^{st} queue scheduling periodicity. At an end moment of the 1^{st} queue scheduling periodicity, the packet scheduler 101 ends the scheduling of the packet queue 1 and starts to perform packet enqueuing scheduling on the packet queue 2, duration in which the packet scheduler 101 schedules the packet queue 2 reaches duration of one queue scheduling periodicity (for example, referred to as a 2^{nd} queue scheduling periodicity), and the packet scheduler 101 buffers, into the packet queue 2, a packet received in the 2^{nd} queue scheduling periodicity. At an end moment of the 2^{nd} queue scheduling periodicity, the packet scheduler 101 ends the scheduling of the packet queue 2 and starts to perform packet enqueuing scheduling on the packet queue 3, duration in which the packet scheduler 101 schedules the packet queue 3 reaches duration of one queue scheduling periodicity (for example, referred to as a 3^{rd} queue scheduling periodicity), and the packet scheduler 101 buffers, into the packet queue 3, a packet received in the 3^{rd} queue scheduling periodicity. The rest is deduced by analogy. After the packet scheduler 101 ends packet enqueuing scheduling on the packet queue m, the packet scheduler 101 sequentially performs packet enqueuing scheduling on the packet queues 1 to m based on the queue scheduling periodicity. This is repeated.

A process in which the packet scheduler 101 performs packet dequeuing cyclic scheduling on the packet queues 1 to m includes: The packet scheduler 101 starts to perform packet dequeuing scheduling on the packet queue 2 from the first boundary, duration in which the packet scheduler 101 schedules the packet queue 2 reaches duration of one queue scheduling periodicity (for example, referred to as a 1^{st} queue scheduling periodicity), and the packet scheduler 101 forwards, in the 1^{st} queue scheduling periodicity, a packet buffered in the packet queue 2. At an end moment of the 1^{st} queue scheduling periodicity, the packet scheduler 101 ends the scheduling of the packet queue 2 and starts to perform packet dequeuing scheduling on the packet queue 3, duration in which the packet scheduler 101 schedules the packet queue 3 reaches duration of one queue scheduling periodicity (for example, referred to as a 2^{nd} queue scheduling periodicity), and the packet scheduler 101 forwards, in the 2^{nd} queue scheduling periodicity, a packet buffered in the packet queue 3. At an end moment of the 2^{nd} queue scheduling periodicity, the packet scheduler 101 ends the scheduling of the packet queue 3 and starts to perform packet dequeuing scheduling on the packet queue 4, duration in which the packet scheduler 101 schedules the packet queue 4 reaches duration of one queue scheduling periodicity (for example, referred to as a 3^{rd} queue scheduling periodicity), and the packet scheduler 101 forwards, in the 3^{rd} queue scheduling periodicity, a packet buffered in the packet queue 4. The rest is deduced by analogy. After ending packet dequeuing scheduling on the packet queue m, the packet scheduler 101 starts to perform packet dequeuing scheduling on the packet queue 1, duration in which the packet scheduler 101 schedules the packet queue 1 reaches duration of one queue scheduling periodicity (for example, referred to as an m^{th} queue scheduling periodicity), and the packet scheduler 101 forwards, in the m^{th} queue scheduling periodicity, a packet buffered in the packet queue 3. After the packet scheduler 101 ends packet dequeuing scheduling on the packet queue 1, the packet scheduler 101 sequentially performs packet dequeuing scheduling on the packet queues 2 to m and 1 based on the queue scheduling periodicity. This is repeated.

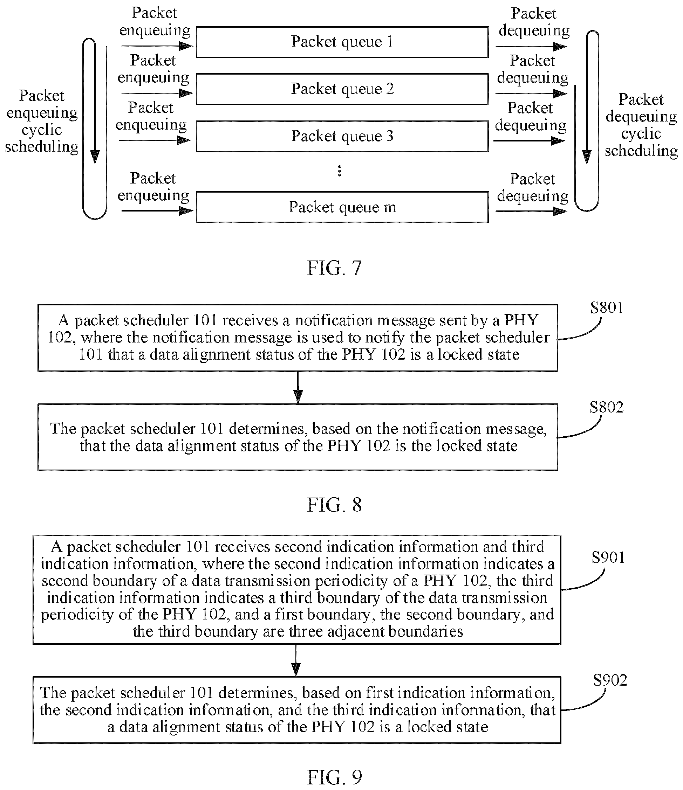

For example, processes in which the packet scheduler 101 performs packet enqueuing cyclic scheduling and packet dequeuing cyclic scheduling on the packet queues 1 to m are shown in FIG. 7. The foregoing descriptions of the processes of performing packet enqueuing cyclic scheduling and packet dequeuing cyclic scheduling on the packet queues 1 to m and FIG. 7 are all examples. During actual application, when the packet scheduler 101 performs packet enqueuing cyclic scheduling on the packet queues 1 to m, in each cyclic process, the packet scheduler 101 may sequentially schedule the packet queues 1 to m in a sequence of the packet queue 1, the packet queue 2, the packet queue 3, ..., and the packet queue m, may sequentially schedule the packet queues 1 to m in a sequence of the packet queue 2, the packet queue 3, the packet queue 4, ..., the packet queue m, and the packet queue 1, may sequentially schedule the packet queues 1 to m in a sequence of the packet queue 3, the packet queue 4, ..., the packet queue m, the packet queue 1, and the packet queue 2, or may sequentially schedule the packet queues 1 to m in another sequence. Similarly, when the packet scheduler 101 performs packet dequeuing cyclic scheduling on the packet queues 1 to m, in each cyclic process, the packet scheduler 101 may sequentially schedule the packet queues 1 to m in a sequence of the packet queue 1, the packet queue 2, the packet queue 3, ..., and the packet queue m, may sequentially schedule the packet queues 1 to m in a sequence of the packet queue 2, the packet queue 3, the packet queue 4, ..., the packet queue m, and the packet queue 1, may sequentially schedule the packet queues 1 to m in a sequence of the packet queue 3, the packet queue 4, ..., the packet queue m, the packet queue 1, and the packet queue 2, or may sequentially schedule the packet queues 1 to m in another sequence. A sequence in which the packet scheduler 101 cyclically schedules the packet queues 1 to m is not limited in this embodiment of this application.

In conclusion, according to the queue scheduling method provided in this embodiment of this application, the network device includes the packet scheduler and the PHY. The first indication information indicates the first boundary of the data transmission periodicity of the PHY. The packet scheduler determines the queue scheduling periodicity based on the first indication information and schedules the plurality of packet queues based on the queue scheduling periodicity. Therefore, determining the queue scheduling periodicity and scheduling the plurality of packet queues based on the queue scheduling periodicity do not require clock synchronization between the network device and another network device, for example, clock synchronization among network-wide network devices, and therefore requirements on the network device are low. In this application, the packet queue can be periodically scheduled without deployment of a clock synchronization system in the network device, and the differences between the queue scheduling periodicities of the different network devices can remain stable. For example, the queue scheduling periodicities of the different network devices are equal, and time differences between boundaries of the queue scheduling periodicities of the different network devices remain stable (for example, the time differences are constant). This can avoid a shift problem of the queue scheduling periodicities of different network devices caused by clock errors. In this application, the packet queue can be scheduled without deployment of a clock synchronization system in the network device. Therefore, implementation costs of the solutions in this application are low, practicability is high, and deployment difficulty is low.

In a process in which the packet scheduler 101 schedules the plurality of packet queues based on the queue scheduling periodicity, the packet scheduler 101 may further receive indication information indicating the boundary of the data transmission periodicity of the PHY 102, and determine whether the boundary indicated by the indication information is staggered from the boundary of the queue scheduling periodicity. If the boundary indicated by the indication information is staggered from the boundary of the queue scheduling periodicity, the packet scheduler 101 may prompt a staff member to intervene.

In an optional embodiment, after S203, the queue scheduling method further includes the following steps S204 and S205.

S204: The packet scheduler 101 receives fifth indication information, where the fifth indication information indicates the boundary of the data transmission periodicity of the PHY 102.

In an optional embodiment, the packet scheduler 101 receives a fifth out-of-band signal sent by the PHY 102, where the fifth out-of-band signal carries the fifth indication information. The fifth indication information is alignment information such as an AM, a CWM, or a FlexE alignment marker, or indication information indicating the AM, the CWM, the FlexE alignment marker, or the like. The fifth indication information is generated by the PHY 102, or is sent to the PHY 102 by the PHY in the previous-hop device of the network device 10 in which the PHY 102 is located.

S205: The packet scheduler 101 determines that the boundary indicated by the fifth indication information is staggered from the boundary of the queue scheduling periodicity, and the packet scheduler 101 generates an alarm.

The packet scheduler 101 may determine whether there is a boundary that is in the queue scheduling periodicity and that is aligned with the boundary indicated by the fifth indication information. If there is no boundary that is in the queue scheduling periodicity and that is aligned with the boundary indicated by the fifth indication information, the packet scheduler 101 determines that the boundary indicated by the fifth indication information is staggered from the boundary of the queue scheduling periodicity, and the packet scheduler 101 generates the alarm. If there is the boundary that is in the queue scheduling periodicity and that is aligned with the boundary indicated by the fifth indication information, the packet scheduler 101 determines that the boundary indicated by the fifth indication information is not staggered from the boundary of the queue scheduling periodicity, and the packet scheduler 101 does not generate the alarm.

In an optional embodiment, the boundary indicated by the fifth indication information corresponds to a moment, and each boundary of the queue scheduling periodicity also corresponds to a moment. The packet scheduler 101 determines the moment corresponding to the boundary indicated by the fifth indication information, and determines whether there is a boundary that is in the queue scheduling periodicity and whose corresponding moment is the same as the moment corresponding to the boundary indicated by the fifth indication information. If there is the boundary that is in the queue scheduling periodicity and whose corresponding moment is the same as the moment corresponding to the boundary indicated by the fifth indication information, the packet scheduler 101 determines that the boundary indicated by the fifth indication information is not staggered from the boundary of the queue scheduling periodicity. If there is no boundary that is in the queue scheduling periodicity and whose corresponding moment is the same as the moment corresponding to the boundary indicated by the fifth indication information, the packet scheduler 101 determines that the boundary indicated by the fifth indication information is staggered from the boundary of the queue scheduling periodicity. In an example, the packet scheduler 101 determines whether a moment at which the packet scheduler 101 receives the fifth indication information is a moment corresponding to a boundary of the queue scheduling periodicity. If the moment at which the packet scheduler 101 receives the fifth indication information is the moment corresponding to the boundary of the queue scheduling periodicity, the packet scheduler 101 determines that the boundary indicated by the fifth indication information is not staggered from the boundary of the queue scheduling periodicity. If the moment at which the packet scheduler 101 receives the fifth indication information is not the moment corresponding to the boundary of the queue scheduling periodicity, the packet scheduler 101 determines that the boundary indicated by the fifth indication information is staggered from the boundary of the queue scheduling periodicity. In another example, the packet scheduler 101 determines whether a time difference between a moment at which the packet scheduler 101 receives the fifth indication information (for example, a moment 1) and a moment closest to the moment 1 in moments corresponding to boundaries of queue scheduling periodicities (for example, a moment 2) is less than a time difference threshold. If the time difference between the moment 1 and the moment 2 is less than the time difference threshold, the packet scheduler 101 determines that the boundary indicated by the fifth indication information is not staggered from the boundary of the queue scheduling periodicity. If the time difference between the moment 1 and the moment 2 is not less than the time difference threshold, the packet scheduler 101 determines that the boundary indicated by the fifth indication information is staggered from the boundary of the queue scheduling periodicity.

In this embodiment of this application, an example in which the boundary indicated by the fifth indication information is staggered from the boundary of the queue scheduling periodicity is used for description, and the packet scheduler 101 generates the alarm. In an optional embodiment, the packet scheduler 101 generates an alarm tone. In another optional embodiment, the packet scheduler 101 controls an indicator of the network device 10 to blink at a predetermined frequency. In still another optional embodiment, the packet scheduler 101 controls an indicator of the network device 10 to emit a light ray of a predetermined color. In yet another optional embodiment, the packet scheduler 101 generates alarm prompt information, and broadcasts the alarm prompt information via a voice broadcast component of the network device 10 or another device (for example, a control device) connected to the network device 10, and/or displays the alarm prompt information via a display component of the network device 10 or another device (for example, a control device) connected to the network device 10. For example, the packet scheduler 101 sends the alarm prompt information to the control device through a communication component, a communication interface, or the like of the network device 10, and the control device presents the alarm prompt information through broadcasting, displaying, or the like. This is not limited in this embodiment of this application.

In conclusion, according to the queue scheduling method provided in this embodiment of this application, because the differences between the data transmission periodicities of the PHYs of the different network devices remain stable, normally, differences between the queue scheduling periodicity determined by the packet scheduler based on the data transmission periodicity of the PHY in the network device in which the packet scheduler is located and queue scheduling periodicities of other network devices remain stable. If the packet scheduler determines that the boundary of the data transmission periodicity of the PHY in the network device in which the packet scheduler is located is staggered from the boundary of the queue scheduling periodicity of the network device, it indicates that differences between the queue scheduling periodicity of the network device and queue scheduling periodicities of other network devices are unstable. Therefore, the packet scheduler generates an alarm, so that the staff member learns that an exception occurs in a queue scheduling process, and performs manual intervention on the queue scheduling process. This helps the packet scheduler normally schedule the packet queue.

When the foregoing queue scheduling method is implemented, a data alignment status of the PHY 102 is a locked state. Optionally, before S202, the packet scheduler 101 determines that the data alignment status of the PHY 102 is the locked state. The data alignment status of the PHY 102 being the locked state means that the data transmission periodicity of the PHY 102 is equal to a data transmission periodicity of a PHY of another network device, and time differences between the boundary of the data transmission periodicity of the PHY 102 and boundaries of the data transmission periodicities of the PHYs of other network devices remain stable (for example, the time differences are constant). In other words, the data transmission periodicities of PHYs of the different network devices are equal, and the time differences between the boundaries of the data transmission periodicities of the PHYs of the different network devices remain stable. The 1^{st} data transmission periodicity (or the initial data transmission periodicity), the 2^{nd} data transmission periodicity, the 3^{rd} data transmission periodicity, the 1^{st} queue scheduling periodicity (or the initial queue scheduling periodicity), the 2^{nd} queue scheduling periodicity, the 3^{rd} queue scheduling periodicity, and the like of the PHY 102 all are periodicities after the data alignment status of the PHY 102 is the locked state.

In this embodiment of this application, the packet scheduler 101 may determine, based on a notification message of the PHY 102, that the data alignment status of the PHY 102 is the locked state, or may determine, based on that adjacent data transmission periodicities of the PHY 102 are equal, that the data alignment status of the PHY 102 is the locked state. Therefore, the packet scheduler 101 determines that the data alignment status of the PHY 102 is the locked state in the following two optional implementations.

Implementation 1: The packet scheduler 101 determines, based on the notification message of the PHY 102, that the data alignment status of the PHY 102 is the locked state. FIG. 8 is a flowchart of determining, by a packet scheduler 101, that a data alignment status of a PHY 102 is a locked state according to an embodiment of this application. The procedure includes the following steps S801 and S802.

S801: The packet scheduler 101 receives a notification message sent by the PHY 102, where the notification message is used to notify the packet scheduler 101 that the data alignment status of the PHY 102 is the locked state.

The PHY 102 may perform initialization training, so that adjacent data transmission periodicities of the PHY 102 are equal, a data transmission periodicity of the PHY 102 is equal to a data transmission periodicity of a PHY of another network device, and time differences between a boundary of the data transmission periodicity of the PHY 102 and boundaries of data transmission periodicities of PHYs of adjacent devices of a network device 10 remain stable. After the foregoing result is achieved, the PHY 102 determines that the data alignment status of the PHY 102 is the locked state, the PHY 102 sends the notification message to the packet scheduler 101, and the packet scheduler 101 receives the notification message. The notification message is used to notify the packet scheduler 101 that the data alignment status of the PHY 102 is the locked state. The PHY 102 may send the notification message to the packet scheduler 101 by using an out-of-band signal, or may send the notification message to the packet scheduler 101 by using another message.

In an optional embodiment, a network device 20 is a previous-hop device of the network device 10, and a network device 30 is a next-hop device of the network device 10. An example in which an AM indicates a boundary of a data transmission periodicity of a PHY is used for description. After the PHY 102 of the network device 10 is enabled, the PHY 102 performs initialization training. In an initialization training process, the PHY 102 receives a data block periodically transmitted by a PHY 202 of the network device 20 and indication information (for example, an AM) indicating a data transmission periodicity of the PHY 202. The PHY 102 determines the data transmission periodicity of the PHY 102 based on the AM sent by the PHY 202, and periodically transmits, to a PHY 302 of the network device 30 based on the data transmission periodicity of the PHY 102, the data block and indication information (for example, an AM) indicating the data transmission periodicity of the PHY 102. The PHY 302 determines a data transmission periodicity of the PHY 302 based on the AM sent by the PHY 102, and periodically transmits, to a PHY of a next-hop device of the network device 30 based on the data transmission periodicity of the PHY 302, the data block and the indication information (for example, the AM) indicating the data transmission periodicity of the PHY 102. Finally, the adjacent data transmission periodicities of the PHY 102 are equal through such initialization training. The data transmission periodicity of the PHY 202, the data transmission periodicity of the PHY 102, and the data transmission periodicity of the PHY 302 are equal. A time difference between a boundary of the data transmission periodicity of the PHY 202 and the boundary of the data transmission periodicity of the PHY 102, and a time difference between the boundary of the data transmission periodicity of the PHY 102 and a boundary of the data transmission periodicity of the PHY 302 remain stable.

S802: The packet scheduler 101 determines, based on the notification message, that the data alignment status of the PHY 102 is the locked state.

The notification message is used to notify the packet scheduler 101 that the data alignment status of the PHY 102 is the locked state. Therefore, the packet scheduler 101 determines, based on the notification message, that the data alignment status of the PHY 102 is the locked state.

Implementation 2: The packet scheduler 101 determines, based on that the adjacent data transmission periodicities of the PHY 102 are equal, that the data alignment status of the PHY 102 is the locked state. FIG. 9 is another flowchart of determining, by a packet scheduler 101, that a data alignment status of a PHY 102 is a locked state according to an embodiment of this application. The procedure includes the following steps S901 and S902.

S901: The packet scheduler 101 receives second indication information and third indication information, where the second indication information indicates a second boundary of a data transmission periodicity of the PHY 102, the third indication information indicates a third boundary of the data transmission periodicity of the PHY 102, and a first boundary, the second boundary, and the third boundary are three adjacent boundaries.

In an optional embodiment, the packet scheduler 101 receives the second indication information and the third indication information that are sent by the PHY 102. For example, the packet scheduler 101 receives a second out-of-band signal and a third out-of-band signal that are sent by the PHY 102, where the second out-of-band signal carries the second indication information, and the third out-of-band signal carries the third indication information. Both the second indication information and the third indication information are alignment information such as AMs, CWMs, or FlexE alignment markers, or both the second indication information and the third indication information are indication information indicating the AMs, the CWMs, the FlexE alignment markers, or the like. Both the second indication information and the third indication information are generated by the PHY 102, or both the second indication information and the third indication information are sent to the PHY 102 by a PHY in a previous-hop device of a network device 10 in which the PHY 102 is located. This is not limited in this embodiment of this application.

The second indication information indicates a second boundary of the data transmission periodicity of the PHY 102, the third indication information indicates a third boundary of the data transmission periodicity of the PHY 102, and the first boundary, the second boundary, and the third boundary are the three adjacent boundaries. For example, the first boundary, the second boundary, and the third boundary are sequentially adjacent; the first boundary, the third boundary, and the second boundary are sequentially adjacent; the second boundary, the first boundary, and the third boundary are sequentially adjacent; the second boundary, the third boundary, and the first boundary are sequentially adjacent; the third boundary, the first boundary, and the second boundary are sequentially adjacent; or the third boundary, the second boundary, and the first boundary are sequentially adjacent. Either the second boundary or the third boundary may be a same boundary as the fourth boundary in S202, or the fourth boundary in S202 may be different from both the second boundary and the third boundary.

S902: The packet scheduler 101 determines, based on first indication information, the second indication information, and the third indication information, that the data alignment status of the PHY 102 is the locked state.

The packet scheduler 101 may determine two adjacent data transmission periodicities of the PHY 102 based on the first indication information, the second indication information, and the third indication information. Then, the packet scheduler 101 determines whether the two adjacent data transmission periodicities are equal. If the packet scheduler 101 determines that the two adjacent data transmission periodicities are equal, the packet scheduler 101 determines that the data alignment status of the PHY 102 is the locked state. If the packet scheduler 101 determines that the two adjacent data transmission periodicities are not equal, the packet scheduler 101 determines that the data alignment status of the PHY 102 is not the locked state. In this embodiment of this application, an example in which the two adjacent data transmission periodicities are equal is used for description. In this case, the packet scheduler 101 determines that the data alignment status of the PHY 102 is the locked state.

In an optional embodiment, the packet scheduler 101 determines the two adjacent data transmission periodicities of the PHY 102 based on the first boundary indicated by the first indication information, the second boundary indicated by the second indication information, and the third boundary indicated by the third indication information. For example, the third boundary, the second boundary, and the first boundary are sequentially adjacent. The first boundary corresponds to a first moment, the second boundary corresponds to a second moment, and the third boundary corresponds to a third moment. The packet scheduler 101 determines a time difference between the second moment and the third moment as a data transmission periodicity (for example, a data transmission periodicity 1) of the PHY 102, and the packet scheduler 101 determines a time difference between the first moment and the second moment as another data transmission periodicity (for example, a data transmission periodicity 2) of the PHY 102. The data transmission periodicity 1 and the data transmission periodicity 2 are two adjacent data transmission periodicities of the PHY 102.

It should be noted that the data alignment status of the PHY 102 being the locked state means that the data transmission periodicity of the PHY 102 is equal to a data transmission periodicity of a PHY of another network device, and time differences between a boundary of the data transmission periodicity of the PHY 102 and boundaries of the data transmission periodicities of the PHYs of other network devices remain stable. In Implementation 2, when the two adjacent data transmission periodicities of the PHY 102 are equal, it is considered that the data transmission periodicity of the PHY 102 is equal to the data transmission periodicity of the PHY of the another network device, and the time differences between the boundary of the data transmission periodicity of the PHY 102 and the boundaries of the data transmission periodicities of the PHYs of other network devices remain stable. Therefore, the packet scheduler 101 determines that the data alignment status of the PHY 102 is the locked state.

In conclusion, according to the queue scheduling method provided in this embodiment of this application, when the packet scheduler determines that the data alignment status of the PHY is the locked state, the packet scheduler determines a queue scheduling periodicity based on indication information indicating a first boundary of a data transmission periodicity of a PHY. Therefore, differences between the queue scheduling periodicity determined by the packet scheduler and queue scheduling periodicities of other network devices can remain stable. In this way, differences between queue scheduling periodicities of different network devices can remain stable.

It should be noted that, before the packet scheduler 101 determines that the data alignment status of the PHY 102 is the locked state, the packet scheduler 101 also schedules the foregoing plurality of packet queues. In this case, a queue switching moment (or referred to as a queue scheduling moment) at which the packet scheduler 101 schedules the plurality of packet queues is randomly set, the packet scheduler 101 schedules the plurality of packet queues based on a manually configured queue switching moment, or the packet scheduler 101 schedules the plurality of packet queues based on a default queue switching moment. After the packet scheduler 101 determines that the data alignment status of the PHY 102 is the locked state, the packet scheduler 101 determines a start boundary of an initial queue scheduling periodicity based on a boundary (for example, the first boundary) of the data transmission periodicity of the PHY 102, that is, determines a start moment at which the plurality of packet queues start to be scheduled for the first time, and the packet scheduler 101 determines, based on a length of the queue scheduling periodicity, the queue switching moment at which the plurality of packet queues are scheduled. An end moment of each queue scheduling periodicity is a queue switching moment, and the packet scheduler 101 switches a packet queue at the end moment of each queue scheduling periodicity.

The foregoing describes the method embodiments of this application. The following describes apparatus embodiments of this application. The apparatuses in this application may be configured to perform the methods in this application. For details that are not disclosed in the apparatus embodiments, refer to the method embodiments.

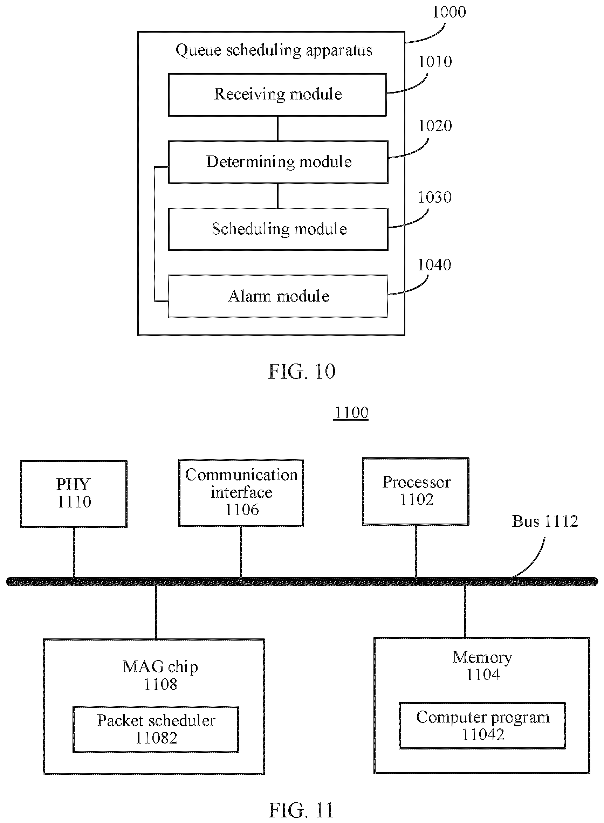

FIG. 10 is a diagram of a queue scheduling apparatus 1000 according to an embodiment of this application. The queue scheduling apparatus 1000 is used in a packet scheduler in a network device. For example, the network device includes a MAG chip, and the MAG chip includes the packet scheduler. The packet scheduler is a layer 2 packet scheduler or a layer 3 packet scheduler. Refer to FIG. 10. The queue scheduling apparatus 1000 includes a receiving module 1010, a determining module 1020, and a scheduling module 1030.

The receiving module 1010 is configured to receive first indication information, where the first indication information indicates a first boundary of a data transmission periodicity of a PHY in the network device. For function implementation of the receiving module 1010, refer to the descriptions in S201.

The determining module 1020 is configured to determine a queue scheduling periodicity based on the first indication information, where the queue scheduling periodicity is used to schedule a plurality of packet queues. For function implementation of the determining module 1020, refer to the descriptions in S202.

The scheduling module 1030 is configured to schedule the plurality of packet queues based on the queue scheduling periodicity. For function implementation of the scheduling module 1030, refer to the descriptions in S203.

Optionally, the receiving module 1010 is further configured to: before the determining module 1020 determines the queue scheduling periodicity based on the first indication information, receive a notification message sent by the PHY, where the notification message is used to notify the packet scheduler that a data alignment status of the PHY is a locked state. For function implementation of the receiving module 1010, further refer to the descriptions in S801.

The determining module 1020 is further configured to determine, based on the notification message, that the data alignment status of the PHY is the locked state. For function implementation of the determining module 1020, further refer to the descriptions in S802.

Optionally, the receiving module 1010 is further configured to: before the determining module 1020 determines the queue scheduling periodicity based on the first indication information, receive second indication information and third indication information, where the second indication information indicates a second boundary of the data transmission periodicity of the PHY, the third indication information indicates a third boundary of the data transmission periodicity of the PHY, and the first boundary, the second boundary, and the third boundary are three adjacent boundaries. For function implementation of the receiving module 1010, further refer to the descriptions in S901.

The determining module 1020 is further configured to determine, based on the first indication information, the second indication information, and the third indication information, that the data alignment status of the PHY is the locked state. For function implementation of the determining module 1020, further refer to the descriptions in S902.

Optionally, the determining module 1020 is configured to: determine two adjacent data transmission periodicities of the PHY based on the first indication information, the second indication information, and the third indication information; and determine that the two adjacent data transmission periodicities are equal, and determine that the data alignment status of the PHY is the locked state.

Optionally, the receiving module 1010 is further configured to receive fourth indication information, where the fourth indication information indicates a fourth boundary of the data transmission periodicity of the PHY, and the fourth boundary is adjacent to the first boundary. Correspondingly, the determining module 1020 is configured to determine the queue scheduling periodicity based on the first indication information and the fourth indication information.

Optionally, the determining module 1020 is configured to: determine the data transmission periodicity of the PHY based on the first indication information and the fourth indication information; and determine the queue scheduling periodicity based on the data transmission periodicity of the PHY.

Optionally, the determining module 1020 is configured to determine the queue scheduling periodicity based on the data transmission periodicity of the PHY and a preset parameter.

Optionally, the queue scheduling periodicity is equal to a product of the data transmission periodicity of the PHY and the preset parameter.

Optionally, the queue scheduling periodicity is equal to the data transmission periodicity of the PHY.

Optionally, the data transmission periodicity of the PHY is an integer multiple of the queue scheduling periodicity.

Optionally, the scheduling module 1030 is configured to schedule the plurality of packet queues based on the first indication information and the queue scheduling periodicity.

Optionally, a start boundary of an initial queue scheduling periodicity used when the scheduling module 1030 schedules the plurality of packet queues is aligned with a boundary of the data transmission periodicity of the PHY.

Optionally, the receiving module 1010 is further configured to receive fifth indication information, where the fifth indication information indicates the boundary of the data transmission periodicity of the PHY. For function implementation of the receiving module 1010, further refer to the descriptions in S204.

The determining module 1020 is further configured to determine that the boundary indicated by the fifth indication information is staggered from a boundary of the queue scheduling periodicity. For function implementation of the determining module 1020, further refer to the descriptions in S205.

The queue scheduling apparatus 1000 further includes an alarm module 1040, configured to generate an alarm. For function implementation of the alarm module 1040, further refer to the descriptions in S205.

Optionally, the scheduling module 1030 is configured to perform at least one of the following: performing packet enqueuing scheduling on the plurality of packet queues based on the queue scheduling periodicity; and performing packet dequeuing scheduling on the plurality of packet queues based on the queue scheduling periodicity.

Optionally, the first indication information includes an AM, a CWM, or a FlexE alignment marker.

Optionally, the receiving module 1010 is configured to receive the first indication information sent by the PHY, where the first indication information is generated by the PHY, or is sent by a PHY in a previous-hop device of the network device to the PHY in the network device.

In conclusion, the queue scheduling apparatus provided in this embodiment of this application is used in the packet scheduler in the network device. The network device further includes the PHY. The PHY periodically transmits data. The first indication information indicates the first boundary of the data transmission periodicity of the PHY. The queue scheduling apparatus determines the queue scheduling periodicity based on the first indication information and schedules the plurality of packet queues based on the queue scheduling periodicity. Therefore, determining the queue scheduling periodicity and scheduling the plurality of packet queues by the queue scheduling apparatus based on the queue scheduling periodicity do not require clock synchronization between the network device and another network device, for example, clock synchronization among network-wide network devices, and therefore requirements on the network device are low. In this application, the packet queue can be periodically scheduled without deployment of a clock synchronization system in the network device, and differences between queue scheduling periodicities of different network devices can remain stable. This avoids a shift problem of the queue scheduling periodicities of the different network devices caused by clock errors. In this application, the packet queue can be scheduled without deployment of the clock synchronization system in the network device. Therefore, implementation costs of the solutions in this application are low, practicability is high, and deployment difficulty is low.

An embodiment of this application provides a chip, including the queue scheduling apparatus 1000 provided in the embodiment shown in FIG. 10.

The chip may be a network chip. For example, the chip is a MAG chip.

Optionally, the chip includes a programmable logic circuit and/or program instructions. When running, the chip is configured to implement all or a part of the steps of the queue scheduling method provided in the foregoing method embodiments.

An embodiment of this application provides a network device, including the foregoing chip, for example, the MAG chip.

FIG. 11 is a diagram of a network device 1100 according to an embodiment of this application. The network device 1100 includes a processor 1102, a memory 1104, a communication interface 1106, a MAG chip 1108, a PHY 1110, and a bus 1112. The processor 1102, the memory 1104, the communication interface 1106, the MAG chip 1108, and the PHY 1110 are communicatively connected through the bus 1112. A connection manner of the processor 1102, the memory 1104, the communication interface 1106, the MAG chip 1108, and the PHY 1110 shown in FIG. 11 is merely used as an example. The processor 1102, the memory 1104, the communication interface 1106, the MAG chip 1108, and the PHY 1110 may alternatively be communicatively connected in a manner other than the bus. The connection manner of the processor 1102, the memory 1104, the communication interface 1106, the MAG chip 1108, and the PHY 1110 is not limited in this application.

The memory 1104 is configured to store a computer program 11042, and the computer program 11042 includes instructions and data. The memory 1104 is various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register.

The processor 1102 is a general-purpose processor. The general-purpose processor is a processor that reads and executes a computer program stored in a memory to perform a specific step and/or operation. In a process of performing the foregoing step and/or operation, the general-purpose processor may use data stored in the memory. The general-purpose processor may be a central processing unit (central processing unit, CPU). The processor 1102 may alternatively be a dedicated processor. The dedicated processor is a processor specially designed to perform a specific step and/or operation. The dedicated processor may be a digital signal processor (digital signal processor, DSP), an application-specific integrated circuit (application-specific integrated circuit, ASIC), a field programmable gate array (field-programmable gate array, FPGA), or the like. Optionally, the processor 1102 includes a plurality of processor cores. In other words, the processor 1102 is a multi-core processor. The processor 1102 includes at least one circuit to perform all or a part of the steps of the methods.

The communication interface 1106 includes an interface configured to implement interconnection between components inside the network device 1100, such as an input/output (input/output, I/O) interface, a physical interface, and a logical interface, and an interface configured to implement interconnection between the network device 1100 and another apparatus (for example, a network device or a control device). The physical interface may be a gigabit Ethernet (gigabit Ethernet, GE) interface, and is configured to implement interconnection between the network device 1100 and another device. The logical interface is an interface inside the network device 1100, and is configured to implement interconnection between the components inside the network device 1100. It is easy to understand that the communication interface 1106 is used by the network device 1100 to communicate with another device. For example, the communication interface 1106 is used to send and receive information, a packet, and the like between the network device 1100 and the another device. The communication interface 1106 can implement a related function of the foregoing receiving module.

The MAG chip 1108 includes a packet scheduler 11082, and the packet scheduler 11082 may implement all or a part of the steps of the queue scheduling method provided in the foregoing embodiments. For example, the packet scheduler 11082 determines a queue scheduling periodicity based on indication information that is provided by the PHY 1110 and that indicates a boundary of a periodicity in which the PHY 1110 transmits data, and cyclically schedules a plurality of packet queues based on the queue scheduling periodicity. Optionally, the packet scheduler 11082 executes the computer program stored in the memory 1104 to implement related functions of the foregoing determining module, scheduling module, alarm module, and the like.

The PHY 1110 is a PHY chip, and is configured to: transmit and process physical layer data. For example, the PHY 1110 periodically transmits and processes the physical layer data. The PHY 1110 may provide the indication information to the packet scheduler 11082, to indicate the boundary of the periodicity in which the PHY 1110 transmits the data, so that the packet scheduler 11082 determines the boundary of the periodicity in which the PHY 1110 transmits the data, and further determines the queue scheduling periodicity based on the boundary of the periodicity in which the PHY 1110 transmits the data.

The bus 1112 is any type of communication bus, for example, a system bus, configured to implement interconnection between the processor 1102, the memory 1104, the communication interface 1106, the MAG chip 1108, and the PHY 1110.

The foregoing components may be separately disposed on chips that are independent of each other, or at least a part or all of the components may be disposed on a same chip. Whether the components are independently disposed on different chips or integrated and disposed on one or more chips usually depends on a need of a product design. A specific implementation form of the foregoing components is not limited in embodiments of this application. In addition, there may be a specific inclusion relationship between the foregoing components. For example, in some embodiments, the MAG chip 1108 is incorporated into a category of the processor 1102, and the MAG chip 1108 may be considered as a dedicated processor chip.

The network device 1100 shown in FIG. 11 is merely an example, and the network device 1100 may further include another component. This is not listed in this specification. The network device shown in FIG. 11 performs queue scheduling by performing all or a part of steps of the foregoing method embodiments.

An embodiment of this application provides a computer-readable storage medium. The computer-readable storage medium stores a computer program. When the computer program is executed (for example, executed by a packet scheduler, a MAG chip, or a network device), all or a part of the steps of the methods provided in the foregoing method embodiments are implemented.

An embodiment of this application provides a computer program product. The computer program product includes a program or code. When the program or the code is executed (for example, executed by a packet scheduler, a MAG chip, or a network device), all or a part of the steps of the methods provided in the foregoing method embodiments are implemented.

All or a part of the foregoing embodiments may be implemented by using software, hardware, firmware, or any combination thereof. When embodiments are implemented by using the software, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or includes a data storage apparatus, such as a server or a data center, integrating one or more usable media. The usable medium may be a magnetic medium (for example, a floppy disk, a hard disk drive, or a magnetic tape), an optical medium, a semiconductor medium (for example, a solidstate drive), or the like.

It should be understood that the term "at least one" in this application means one or more, and the term "a plurality of" means two or more than two. In this application, unless otherwise specified, the character "/" usually indicates "or". For example, A/B may indicate A or B. The term "and/or" in this application describes only an association relationship for describing associated objects and indicates that three relationships may exist. For example, A and/or B may indicate the following three cases: Only A exists, both A and B exist, and only B exists. In addition, for ease of clear description, in this application, the words such as "first", "second", and "third" are used to distinguish between same items or similar items whose functions and purposes are basically the same. A person skilled in the art may understand that the words such as "first", "second", and "third" do not limit a quantity and an execution sequence.

Different types of embodiments such as the method embodiments and the apparatus embodiments provided in embodiments of this application may be cross-referenced. This is not limited in embodiments of this application. A sequence of operations in the method embodiments provided in embodiments of this application can be properly adjusted, and the operations can be correspondingly added or deleted based on a situation. Any variation method that can be readily figured out by a person skilled in the art within the technical scope disclosed in this application shall fall within the protection scope of this application. Therefore, details are not described again.

In the corresponding embodiments provided in this application, it should be understood that the disclosed apparatuses and the like may be implemented in other composition manners. For example, the described apparatus embodiments are merely examples. For example, division into the units is merely logical function division and may be other division during actual implementation. For example, a plurality of units or components may be combined or integrated into another system, or some features may be ignored or not performed.

Units described as separate parts may or may not be physically separate, and parts described as units may or may not be physical units, may be located in one position, or may be distributed on a plurality of network devices. A part or all of the units may be selected based on an actual requirement to achieve the objectives of the solutions of embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A queue scheduling method, wherein the method comprises:
receiving, by a packet scheduler in a network device, first indication information, wherein the first indication information indicates a first boundary of a data transmission periodicity of a physical layer PHY in the network device;
determining, by the packet scheduler, a queue scheduling periodicity based on the first indication information, wherein the queue scheduling periodicity is used to schedule a plurality of packet queues; and
scheduling, by the packet scheduler, the plurality of packet queues based on the queue scheduling periodicity.

2. The method according to claim 1, wherein before the determining, by the packet scheduler, a queue scheduling periodicity based on the first indication information, the method further comprises:
receiving, by the packet scheduler, a notification message sent by the PHY, wherein the notification message is used to notify the packet scheduler that a data alignment status of the PHY is a locked state; and
determining, by the packet scheduler based on the notification message, that the data alignment status of the PHY is the locked state.

3. The method according to claim 1, wherein before the determining, by the packet scheduler, a queue scheduling periodicity based on the first indication information, the method further comprises:
receiving, by the packet scheduler, second indication information and third indication information, wherein the second indication information indicates a second boundary of the data transmission periodicity of the PHY, the third indication information indicates a third boundary of the data transmission periodicity of the PHY, and the first boundary, the second boundary, and the third boundary are three adjacent boundaries; and
determining, by the packet scheduler based on the first indication information, the second indication information, and the third indication information, that the data alignment status of the PHY is the locked state.

4. The method according to claim 3, wherein the determining, by the packet scheduler based on the first indication information, the second indication information, and the third indication information, that the data alignment status of the PHY is the locked state comprises:
determining, by the packet scheduler, two adjacent data transmission periodicities of the PHY based on the first indication information, the second indication information, and the third indication information; and
determining, by the packet scheduler, that the two adjacent data transmission periodicities are equal, and determining, by the packet scheduler, that the data alignment status of the PHY is the locked state.

5. The method according to any one of claims 1 to 4, wherein
the method further comprises: receiving, by the packet scheduler, fourth indication information, wherein the fourth indication information indicates a fourth boundary of the data transmission periodicity of the PHY, and the fourth boundary is adjacent to the first boundary; and
the determining, by the packet scheduler, a queue scheduling periodicity based on the first indication information comprises: determining, by the packet scheduler, the queue scheduling periodicity based on the first indication information and the fourth indication information.

6. The method according to claim 5, wherein the determining, by the packet scheduler, the queue scheduling periodicity based on the first indication information and the fourth indication information comprises:
determining, by the packet scheduler, the data transmission periodicity of the PHY based on the first indication information and the fourth indication information; and
determining, by the packet scheduler, the queue scheduling periodicity based on the data transmission periodicity of the PHY.

7. The method according to claim 6, wherein the determining, by the packet scheduler, the queue scheduling periodicity based on the data transmission periodicity of the PHY comprises:
determining, by the packet scheduler, the queue scheduling periodicity based on the data transmission periodicity of the PHY and a preset parameter.

8. The method according to claim 7, wherein
the queue scheduling periodicity is equal to a product of the data transmission periodicity of the PHY and the preset parameter.

9. The method according to any one of claims 1 to 8, wherein
the queue scheduling periodicity is equal to the data transmission periodicity of the PHY.

10. The method according to any one of claims 1 to 8, wherein
the data transmission periodicity of the PHY is an integer multiple of the queue scheduling periodicity.

11. The method according to any one of claims 1 to 10, wherein the scheduling, by the packet scheduler, the plurality of packet queues based on the queue scheduling periodicity comprises:
scheduling, by the packet scheduler, the plurality of packet queues based on the first indication information and the queue scheduling periodicity.

12. The method according to any one of claims 1 to 11, wherein
a start boundary of an initial queue scheduling periodicity used when the packet scheduler schedules the plurality of packet queues is aligned with a boundary of the data transmission periodicity of the PHY.

13. The method according to any one of claims 1 to 12, wherein the method further comprises:
receiving, by the packet scheduler, fifth indication information, wherein the fifth indication information indicates the boundary of the data transmission periodicity of the PHY; and
determining, by the packet scheduler, that the boundary indicated by the fifth indication information is staggered from a boundary of the queue scheduling periodicity, and generating, by the packet scheduler, an alarm.

14. The method according to any one of claims 1 to 13, wherein the scheduling, by the packet scheduler, the plurality of packet queues based on the queue scheduling periodicity comprises at least one of the following:
performing, by the packet scheduler, packet enqueuing scheduling on the plurality of packet queues based on the queue scheduling periodicity; and
performing, by the packet scheduler, packet dequeuing scheduling on the plurality of packet queues based on the queue scheduling periodicity.

15. The method according to any one of claims 1 to 14, wherein
the first indication information comprises an alignment marker AM, a codeword marker CWM, or a flexible Ethernet FlexE alignment marker.

16. The method according to any one of claims 1 to 15, wherein the receiving, by a packet scheduler, first indication information comprises:
receiving, by the packet scheduler, the first indication information sent by the PHY, wherein the first indication information is generated by the PHY, or is sent by a PHY in a previous-hop device of the network device to the PHY in the network device.

17. The method according to any one of claims 1 to 16, wherein
the network device comprises a media access group MAG chip, and the MAG chip comprises the packet scheduler.

18. A queue scheduling apparatus, used in a packet scheduler in a network device, wherein the apparatus comprises:
a receiving module, configured to receive first indication information, wherein the first indication information indicates a first boundary of a data transmission periodicity of a physical layer PHY in the network device;
a determining module, configured to determine a queue scheduling periodicity based on the first indication information, wherein the queue scheduling periodicity is used to schedule a plurality of packet queues; and
a scheduling module, configured to schedule the plurality of packet queues based on the queue scheduling periodicity.

19. The apparatus according to claim 18, wherein
the receiving module is further configured to: before the determining module determines the queue scheduling periodicity based on the first indication information, receive a notification message sent by the PHY, wherein the notification message is used to notify the packet scheduler that a data alignment status of the PHY is a locked state; and
the determining module is further configured to determine, based on the notification message, that the data alignment status of the PHY is the locked state.

20. The apparatus according to claim 18, wherein
the receiving module is further configured to: before the determining module determines the queue scheduling periodicity based on the first indication information, receive second indication information and third indication information, wherein the second indication information indicates a second boundary of the data transmission periodicity of the PHY, the third indication information indicates a third boundary of the data transmission periodicity of the PHY, and the first boundary, the second boundary, and the third boundary are three adjacent boundaries; and
the determining module is further configured to determine, based on the first indication information, the second indication information, and the third indication information, that the data alignment status of the PHY is the locked state.

21. The apparatus according to claim 20, wherein the determining module is configured to:
determine two adjacent data transmission periodicities of the PHY based on the first indication information, the second indication information, and the third indication information; and
determine that the two adjacent data transmission periodicities are equal, and determine that the data alignment status of the PHY is the locked state.

22. The apparatus according to any one of claims 18 to 21, wherein
the receiving module is further configured to receive fourth indication information, wherein the fourth indication information indicates a fourth boundary of the data transmission periodicity of the PHY, and the fourth boundary is adjacent to the first boundary; and
the determining module is configured to determine the queue scheduling periodicity based on the first indication information and the fourth indication information.

23. The apparatus according to claim 22, wherein the determining module is configured to:
determine the data transmission periodicity of the PHY based on the first indication information and the fourth indication information; and
determine the queue scheduling periodicity based on the data transmission periodicity of the PHY.

24. The apparatus according to claim 23, wherein
the determining module is configured to determine the queue scheduling periodicity based on the data transmission periodicity of the PHY and a preset parameter.

25. The apparatus according to claim 24, wherein
the queue scheduling periodicity is equal to a product of the data transmission periodicity of the PHY and the preset parameter.

26. The apparatus according to any one of claims 18 to 25, wherein
the queue scheduling periodicity is equal to the data transmission periodicity of the PHY.

27. The apparatus according to any one of claims 18 to 25, wherein
the data transmission periodicity of the PHY is an integer multiple of the queue scheduling periodicity.

28. The apparatus according to any one of claims 18 to 27, wherein
the scheduling module is configured to schedule the plurality of packet queues based on the first indication information and the queue scheduling periodicity.

29. The apparatus according to any one of claims 18 to 28, wherein
a start boundary of an initial queue scheduling periodicity used when the scheduling module schedules the plurality of packet queues is aligned with a boundary of the data transmission periodicity of the PHY.

30. The apparatus according to any one of claims 18 to 29, wherein
the receiving module is further configured to receive fifth indication information, wherein the fifth indication information indicates the boundary of the data transmission periodicity of the PHY; and
the determining module is further configured to determine that the boundary indicated by the fifth indication information is staggered from a boundary of the queue scheduling periodicity; and
the apparatus further comprises: an alarm module, configured to generate an alarm.

31. The apparatus according to any one of claims 18 to 30, wherein
the scheduling module is configured to perform at least one of the following:
performing packet enqueuing scheduling on the plurality of packet queues based on the queue scheduling periodicity; and
performing packet dequeuing scheduling on the plurality of packet queues based on the queue scheduling periodicity.

32. The apparatus according to any one of claims 18 to 31, wherein
the first indication information comprises an alignment marker AM, a codeword marker CWM, or a flexible Ethernet FlexE alignment marker.

33. The apparatus according to any one of claims 18 to 32, wherein
the receiving module is configured to receive the first indication information sent by the PHY, wherein the first indication information is generated by the PHY, or is sent by a PHY in a previous-hop device of the network device to the PHY in the network device.

34. The apparatus according to any one of claims 18 to 33, wherein
the network device comprises a media access group MAG chip, and the MAG chip comprises the packet scheduler.

35. A chip, comprising the queue scheduling apparatus according to any one of claims 18 to 34.

36. The chip according to claim 35, wherein the chip comprises a media access group MAG chip.

37. A network device, comprising the chip according to claim 35 or 36.

38. A computer-readable storage medium, wherein the computer-readable storage medium stores a computer program, and when the computer program is executed, the queue scheduling method according to any one of claims 1 to 17 is implemented.

39. A computer program product, wherein the computer program product comprises a program or code, and when the program or the code is executed, the queue scheduling method according to any one of claims 1 to 17 is implemented.
